(19) **Europäisches Patentamt European Patent Office Office européen des brevets**

(11) **EP 4 311 356 B1**

(12) **EUROPEAN PATENT SPECIFICATION**

(45) Date of publication and mention of the grant of the patent:
**17.06.2026 Bulletin 2026/25**

(21) Application number: **22779105.0**

(22) Date of filing: **31.03.2022**

(51) International Patent Classification (IPC):
*H04L 1/18* (2023.01)    *H04W 72/12* (2023.01)
*H04L 1/00* (2006.01)    *H04L 5/00* (2006.01)
*H04W 4/06* (2009.01)    *H04W 76/28* (2018.01)
*H04L 1/1867* (2023.01)

(52) Cooperative Patent Classification (CPC):
**H04W 4/06; H04L 1/1822; H04L 1/1851;**
**H04L 1/188; H04L 1/1887; H04W 76/28;**
H04L 2001/0093; H04W 76/40; H04W 92/18

(86) International application number:
**PCT/CN2022/084635**

(87) International publication number:
**WO 2022/206925 (06.10.2022 Gazette 2022/40)**

(54) **SIDELINK TRANSMISSION METHOD AND APPARATUS**

VERFAHREN UND VORRICHTUNG ZUR SIDELINK-ÜBERTRAGUNG

PROCÉDÉ ET APPAREIL DE TRANSMISSION DE LIAISON LATÉRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2021 CN 202110358493**
**07.01.2022 CN 202210016694**

(43) Date of publication of application:
**24.01.2024 Bulletin 2024/04**

(73) Proprietor: **Huawei Technologies Co., Ltd.**
**Shenzhen, Guangdong 518129 (CN)**

(72) Inventors:
• **LIU, Jun**
**Shenzhen, Guangdong 518129 (CN)**
• **PENG, Wenjie**
**Shenzhen, Guangdong 518129 (CN)**
• **CHANG, Junren**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
WO-A1-2018/028279    WO-A1-2018/174456
WO-A1-2020/087365    WO-A1-2020/218892
WO-A1-2021/032026    CN-A- 107 241 786
CN-A- 109 479 189    CN-A- 111 466 151
CN-A- 112 512 102    US-A1- 2020 344 722

• **HUAWEI, HISILICON: "Consideration on sidelink DRX for broadcast and groupcast", 3GPP DRAFT; R2-2103174, vol. RAN WG2, 2 April 2021 (2021-04-02), pages 1 - 7, XP052174781**
• **INTEL CORPORATION: "On general sidelink DRX design", 3GPP DRAFT; R2-2100622, vol. RAN WG2, 15 January 2021 (2021-01-15), pages 1 - 4, XP051973746**
• **ASUSTEK: "Discussion on Sidelink DRX", 3GPP DRAFT; R2-2101756, vol. RAN WG2, 15 January 2021 (2021-01-15), pages 1 - 4, XP051974621**
• **OPPO: "Summary of [AT113-e][707]", 3GPP DRAFT; R2-2102183, vol. RAN WG2, 10 February 2021 (2021-02-10), pages 1 - 19, XP051977977**
• **MEDIATEK INC.: "On SL DRX", 3GPP DRAFT; R2-2010332, vol. RAN WG2, 23 October 2020 (2020-10-23), pages 1 - 7, XP051943012**

EP 4 311 356 B1

## Description

### TECHNICAL FIELD

This application relates to the field of communication technologies, and in particular, to a sidelink transmission method and apparatus.

### BACKGROUND

In a long term evolution (long term evolved, LTE) system to a new radio (new radio, NR) system, a link for data transmission between user equipment (User Equipment, UE) and a base station is referred to as an uplink/downlink, and a link for data transmission between UEs is referred to as a sidelink (Sidelink, SL). The sidelink may be usually applied to a direct communication scenario such as a vehicle-to-everything (vehicle to everything, V2X) scenario or a device-to-device (device to device, D2D) scenario. Sidelinks support unicast, multicast, and broadcast.

In a wireless communication system, to reduce power consumption of UE on a premise of ensuring that data can be effectively transmitted, a discontinuous reception (discontinuous reception, DRX) mechanism is introduced to control behavior of listening on a physical downlink control channel (Physical Downlink Control Channel, PDDCH) by the UE. For example, a DRX information parameter of UE may include an active time, that is, the UE may continuously listen on the PDCCH in the active time (on Duration) of the DRX, to obtain scheduling information. If the UE does not receive any scheduling information in the onduration time, the UE enters a sleep state and stops listening on the PDCCH. In addition, the DRX information parameter of the UE may further include a retransmission timer, and the retransmission timer is a timer for each hybrid automatic repeat request (Hybrid Automatic Repeat Request, HARQ) process. In other words, the UE maintains a retransmission timer for each HARQ process. To ensure data transmission reliability, a receiving device may send a HARQ feedback corresponding to the HARQ process to a sending device. The HARQ feedback is used to indicate whether transmitted data is correctly received by the receiving device, so that the sending device can determine, based on the HARQ feedback, whether to perform HARQ retransmission.

Currently, when the foregoing HARQ mechanism is applied to a sidelink multicast scenario or a sidelink broadcast scenario, HARQ feedbacks from a plurality of receiving UEs corresponding to one sending UE may be different, and whether the receiving UEs enable retransmission timers and occasions for enabling the retransmission timers may also be different. Therefore, a packet loss may occur on some receiving UEs, and reliability of sidelink multicast or broadcast data transmission cannot be ensured.

International patent application WO 2021/032026 A1 describes a discontinuous reception method wherein a first terminal may maintain a drx-RetransmissionTimerSL timer.

### SUMMARY

This application provides a sidelink transmission method and apparatus, to resolve a problem of reliability of sidelink multicast or broadcast data transmission.

The invention is set out in the appended set of claims.

### BRIEF DESCRIPTION OF THE DRAWINGS

FIG. 1 is a system architectural diagram of a communication network according to an embodiment of this application;
FIG. 2 is a schematic diagram of a DRX information parameter according to an embodiment of this application;
FIG. 3 is a system architectural diagram of a communication apparatus according to an embodiment of this application;
FIG. 4 to FIG. 8 are schematic flowcharts of a sidelink transmission method according to embodiments of this application;
FIG. 9 to FIG. 11 are schematic diagrams of structures of a communication apparatus according to embodiments of this application;
FIG. 12 to FIG. 14 are schematic flowcharts of a sidelink transmission method according to embodiments of this application; and
FIG. 15 and FIG. 16 are schematic diagrams of configuring SL DRX for different SL services by a communication apparatus according to embodiments of this application.

**DESCRIPTION OF EMBODIMENTS**

The following clearly describes the technical solutions in the embodiments of this application with reference to the accompanying drawings in the embodiments of this application. Apparently, the described embodiments are merely some but not all of the embodiments of this application.

In this specification, claims, and the foregoing accompanying drawings of this application, terms "first", "second", "third", "fourth", and the like are intended to distinguish between different objects, but are not used to limit a particular sequence. In addition, the terms "include", "comprise", and any variation thereof are intended to cover non-exclusive inclusion. For example, a process, method, system, product, or device that includes a series of steps or units is not necessarily limited to those listed steps or units, but optionally further includes steps or units that are not listed, or optionally further includes steps or units that are inherent to such a process, method, system, product, or device.

In the following descriptions, to illustrate rather than limit, specific details such as a particular system structure, an interface, and a technology are provided to facilitate thorough understanding of this application. However, a person skilled in the art should know that this application may also be implemented in other embodiments without these specific details. In other cases, detailed descriptions of well-known mobile devices, circuits, and methods are omitted, so that this application is described without being obscured by unnecessary details.

In addition, a term "and/or" in this specification is merely an association relationship for describing associated objects and indicates that three relationships may exist. For example, A and/or B may indicate the following cases: Only A exists, both A and B exist, and only B exists. In addition, the character "/" in this specification generally indicates an "or" relationship between the associated objects. First, to facilitate understanding of this application, a communication technology and a network architecture in the embodiments of this application are briefly described.

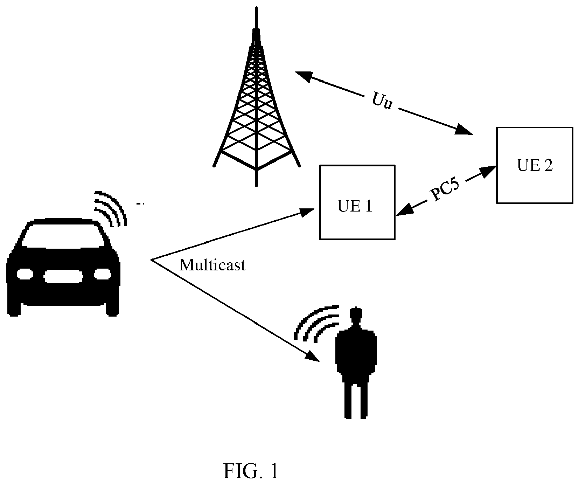

Technical solutions provided in the embodiments of this application may be applied to any communication system supporting sidelink communication. The communication system may be a 3rd generation partnership project (3rd generation partnership project, 3GPP) communication system, for example, a long term evolution (long term evolution, LTE) system; may be a 5th generation (5th generation, 5G) mobile communication system, a new radio (new radio, NR) system, a vehicle-to-everything (vehicle-to-everything, V2X) system, or another next generation communication system; or may be a non-3GPP communication system. Details are not limited. The following uses FIG. 1 as an example to describe a method provided in an embodiment of this application.

FIG. 1 is a schematic diagram of an implementation environment of a sidelink transmission method according to an embodiment of this application. As shown in FIG. 1, in this embodiment of this application, a communication system is provided. The system may include at least two terminal devices, for example, includes a UE 1 and a UE 2. In addition, the communication system may further include at least one network device. The terminal device may be located in cell coverage of the network device, or may be located out of cell coverage of the network device.

The network device may be any device that has a wireless transceiver function, and is mainly configured to implement functions such as radio physical control, resource scheduling, radio resource management, radio access control, and mobility management. Specifically, the network device may be an access network (access network, AN)/radio access network (radio access network, RAN) device, or may be a device including a plurality of 5G-AN/5G-RAN nodes, or may be any node in a NodeB (nodeB, NB), an evolved NodeB (evolution nodeB, eNB), a next-generation NodeB (generation nodeB, gNB), a transmission and reception point (transmission receive point, TRP), a transmission point (transmission point, TP), a roadside unit (road side unit, RSU), or another access node. Details are not limited.

The terminal device may be a mobile phone (mobile phone), a tablet computer (Pad), a computer with a wireless transceiver function, a vehicle-mounted terminal, a virtual reality (virtual reality, VR) terminal device, an augmented reality (augmented reality, AR) terminal device, a wireless terminal in industrial control (industrial control), a wireless terminal in self-driving (self driving), an RSU, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. An application scenario is not limited in this embodiment of this application. In the following implementations of this application, an example in which the terminal device is user equipment is used for description.

As shown in FIG. 1, in an NR system, there are two types of air interfaces: a Uu interface and a PC5 interface. The Uu interface may be configured to perform communication between the user equipment and the network device. For example, a communication link used by the UE to transmit data to a base station is referred to as an uplink (Uplink, UL), and a communication link used by the base station to transmit data to the UE is referred to as a downlink (Downlink, DL). The PC5 interface may be configured to perform SL communication between the user equipment and another user equipment.

When a DRX mechanism is configured on the UE, the UE may cyclically enter a sleep state, and the UE does not need to continuously listen on a PDCCH. When needing to listen on the PDCCH, the UE may wake up from the sleep state, and the UE may listen on the PDCCH, so that the UE saves power.

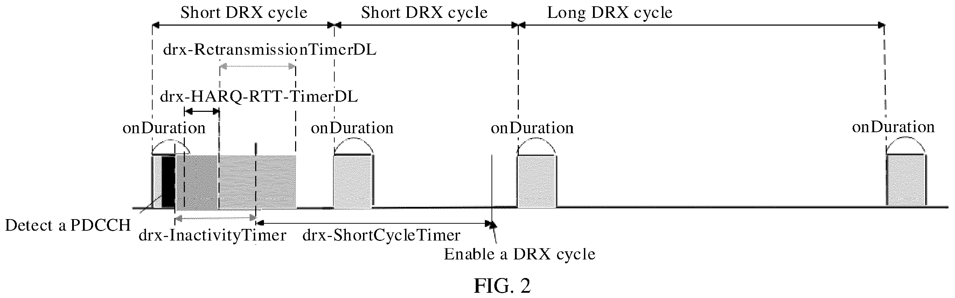

For example, in a transmission scenario between the UE and the base station, as shown in FIG. 2, DRX information with a long cycle and DRX information with a short cycle may be configured on the UE, to implement a DRX working mechanism. The DRX working mechanism of the UE may be implemented by configuring the following parameters.

1. drx-onDurationTimer: an example of a DRX onduration timer. The parameter indicates online duration that is in one DRX cycle and for which the UE enables an active state after waking up and can listen on the PDCCH.
When meeting an enabling condition of the DRX cycle, the UE enables the drx-onDurationTimer. For the enabling condition of the DRX cycle, refer to a related conventional technology. This is not specifically limited herein.
In addition, the UE stops the timer when receiving a DRX command Media Access Control (Media Access Control, MAC) control element (Controlling Element, CE); or the UE disables the timer when receiving a MAC CE command with a long DRX cycle.
2. drx-SlotOffset: a latency before the UE enables drx-onDurationTimer.
3. drx-InactivityTimer: an example of a DRX inactivity timer. After successfully and blindly detecting a downlink PDCCH, the UE enables the drx-InactivityTimer, and continuously listens on the PDCCH within the timer. The parameter indicates duration for which the UE further needs to continue listening on the PDCCH after successfully decoding a PDCCH for scheduling new transmission.
The timer is enabled or re-enabled when new uplink or downlink transmission is indicated on the PDCCH. The timer is disabled when the DRX command MAC CE (go-to-sleep) or the DRX command MAC CE with a long DRX cycle is received. After the timer expires, the UE enables or re-enables a timer drx-ShortCycleTimer with a short DRX cycle if a short DRX cycle is configured on the UE.
4. drx-RetransmissionTimerDL: DL retransmission timer, indicating longest duration to a time at which the UE receives DL retransmission or longest duration for which the UE needs to continuously perform listening to receive DL retransmitted data; and
drx-RetransmissionTimerUL: UL retransmission timer, indicating longest duration to a time at which the UE receives a grant for UL retransmission, or longest duration for which the UE needs to continuously perform listening to receive a UL retransmission grant.
5. drx-HARQ-RTT-TimerDL: DL HARQ round trip time (Round Trip Time, RTT) timer, indicating minimum duration that the UE needs to wait before receiving expected retransmitted downlink data; and
drx-HARQ-RTT-TimerUL: used to indicate minimum duration that UE needs to wait before receiving an uplink retransmission grant.
Once the drx-HARQ-RTT-TimerDL/UL timer expires, it means that the UE may start to receive retransmitted data on a base station side or may send retransmitted uplink data. If the RTT timer does not expire, the base station does not deliver retransmitted data, or the UE does not need to retransmit data.
The timer is enabled when the PDCCH received by the UE indicates that there is downlink or uplink transmission, or when data is received in configured downlink allocation or data is sent in a configured uplink grant. After the timer expires, the retransmission timer drx-RetransmissionTimer is enabled.
6. dRx-ShortCycle: indicates duration of a short DRX cycle used in DRX information.
7. drx-ShortCycleTimer: duration for which the UE uses a short DRX cycle, that is, a quantity of short DRX cycles enters a long cycle before a PDCCH is received.
8. drx-LongCycleStartOffset: The parameter may indicate both meanings: drx-LongCycle (duration of a long DRX cycle) and drx-StartOffset.
9. drx-StartOffset: The parameter is used to indicate a start location of a DRX cycle.

It should be noted that when the DRX working mechanism is introduced to an SL multicast or broadcast service, for a configuration parameter of SL DRX, refer to the foregoing DRX configuration parameter. The configuration parameter may be the same as or may be different from the foregoing parameter. A specific parameter type and an indicated function are described in detail below, and details are not described herein again.

However, in an SL transmission scenario, the user equipment may communicate with another user equipment one to one in a unicast manner, and may also perform multicast or broadcast communication with a plurality of other terminals in a multicast or broadcast manner. The unicast manner described in this application may mean that one terminal communicates with another terminal through a one-to-one SL link. The broadcast manner may mean that one terminal broadcasts a message to surroundings of the terminal, and that one or more other terminals receive the broadcast message. The multicast manner may mean that one terminal sends data or a message to one or more terminals in a multicast group. For example, one intelligent terminal may simultaneously send an SL multicast service to a plurality of intelligent terminals, and transmit a service with a large data volume, for example, a video communication service, by using a sidelink, to effectively compensate for a bandwidth limitation of the Uu interface.

It should be noted that FIG. 1 is merely an example of an accompanying drawing, a quantity of devices included in FIG. 1 is not limited. In addition to the devices shown in FIG. 1, the communication architecture may further include another device. In addition, a name of each device in FIG. 1 is not limited. In addition to the name shown in FIG. 1, each device may be named otherwise. This is not limited.

A resource allocation solution of an NR SL includes a mode 1 and a mode 2. In the mode 1, the network device schedules a resource for the terminal based on a sidelink transmission requirement of the terminal. The network device may allocate a resource by using a dedicated radio network temporary identifier (radio network temporary identifier, RNTI) of the terminal device, and mainly supports UE in a connected mode. However, in the mode 2, the terminal independently selects a resource, and one or more terminal devices share the resource. The resource may be broadcast by using a system message or configured by using dedicated signaling, and is specific to UE in an idle mode, UE in an inactive state, and UE in a connected mode.

Vehicle-to-pedestrian (vehicle to pedestrian, V2P) communication falls into a category of V2X communication. In a typical V2P service scenario, information shared by a vehicle to a surrounding pedestrian may include, but is not limited to: a quantity of currently vacant seats, a destination, an estimated arrival time, a stopover place, and the like of a current vehicle, and is used by the vehicle to broadcast a passenger carrying intention to the pedestrian.

In a V2X communication system, to improve communication quality of a direct link, a HARQ mechanism is introduced in the V2X communication system. After a transmit end sends a transport block (transport block, TB), after receiving the transport block (transport block, TB) sent by the transmit end, a receive end may perform acknowledgement (acknowledgement, ACK) or negative acknowledgement (non-acknowledgement, NACK) on the TB by using 1-bit information.

HARQ mechanism: After receiving and demodulating the data sent by the transmit end, the receive end checks whether the data is correct. If the check succeeds, the receive end sends an ACK to the transmit end. If the check fails, the receive end sends a negative acknowledgement instruction NACK to the transmit end. After detecting the ACK/NACK fed back by the receive end, the transmit end determines whether to retransmit the data.

However, the transmit end stops to wait for an acknowledgement each time after transmitting the TB, resulting in a very low throughput. Therefore, a plurality of parallel HARQ processes (HARQ process) may be used. When one HARQ process is waiting for acknowledgement information, the transmit end may continue sending data by using another HARQ process. The HARQ processes jointly form a HARQ entity (HARQ entity). The entity is combined with a stop-and-wait protocol and allows continuous data transmission.

For each of the HARQ processes, a timer associated with the HARQ process is maintained at both the receive end and the transmit end, and the timer is used to limit duration for transmitting a TB by using the HARQ process. The used timer is described below together with a related timer in the DRX information, and details are not described herein.

Further, SL multicast has two HARQ mechanisms: a manner 1 and a manner 2.

In the manner 1, a HARQ-NACK is sent only when receiving UE unsuccessfully decodes a corresponding TB; and no HARQ feedback is performed if the receiving UE successfully decodes the TB.

All receiving UEs in an SL multicast group share one physical sidelink feedback channel (physical sidelink feedback channel, PSFCH) resource for feedback. In addition, only UE in a communication range needs to perform HARQ feedback. Specifically, a location of sending UE may be indicated in the sidelink control information (Sidelink Control information, SCI). After decoding the SCI, the receiving UE may obtain a communication range requirement. The receiving UE may estimate a distance between the receiving UE and the sending UE based on a location of the receiving UE and the location of the sending UE, to determine whether HARQ feedback needs to be performed.

In the manner 2, a HARQ-ACK is sent when receiving UE successfully decodes a corresponding TB; and a HARQ-NACK is sent if the receiving UE unsuccessfully decodes the TB.

Each UE in the SL multicast group performs feedback by using an independent PSFCH resource. The receiving UE needs to find a unique PSFCH feedback resource of the receiving UE based on a unique identifier in one group. An SA2 allocates the unique ID in the group. A V2X layer may provide a group size and an ID of a member UE for an AS layer.

It should be noted that in this embodiment of this application, the sending UE and the receiving UE are relative concepts. The sending UE may be a terminal or a terminal apparatus that sends a TB in a HARQ process on a sidelink, and the receiving UE may be a terminal or a terminal apparatus that receives a TB in a HARQ process on a sidelink.

Currently, in DRX of the Uu interface, if determining that a retransmission timer corresponding to a HARQ process of the UE is running, in addition to scheduling retransmission and new transmission of the HARQ process, the base station may further schedule retransmission and new transmission of another HARQ process.

If a HARQ RTT timer and a retransmission timer are introduced into the SL multicast, for a same TB block/SL process (using an SL process A as an example), receiving UE in the SL multicast group enables a retransmission timer retransmission timer corresponding to the SL process A because of unsuccessfully decoding data, and some other receiving UEs do not enable a retransmission timer corresponding to the SL process A because of successfully decoding the data (that is, whether different receiving UEs enable different retransmission timers). However, because the sending UE in the SL multicast group receives the TB/NACK of the SL process A, the sending UE enables the corresponding retransmission timer when the HARQ RTT timer corresponding to the SL process A expires. In this case, based on DRX logic of the foregoing Uu interface, the sending UE may schedule transmission (including new transmission and retransmission) in the SL process A and another SL process during running of the retransmission timer. Consequently, a packet loss may occur on receiving UE that does not enable the retransmission timer and a retransmission timer in another SL process, and does not enable the onduration timer and the inactivity timer.

In the foregoing implementation scenario, some receiving UEs do not enable the retransmission timer corresponding to the SL process A, indicating that the receiving UEs have successfully decoded the data corresponding to the SL process A. Therefore, it is feasible that the sending UE sends retransmission corresponding to the SL process A during running of the "retransmission timer corresponding to the SL process A", and no packet loss occurs on the receiving UE. However, if the sending UE sends new transmission of the SL process A, or new transmission and retransmission of the another SL process during running of the "retransmission timer corresponding to the SL process A", the receiving UE that does not enable the retransmission timer corresponding to the SL process A may lose a packet because the receiving UE may be in an inactive state (inactive time). In other words, the receiving UE receives no new transmission of the SL process A or no new transmission or retransmission of the another SL process sent by the sending UE during running of the "retransmission timer corresponding to the SL process A".

In another implementation, when the sending UE receives no PSFCH (SL HARQ feedback) of the receiving UE, if the mode 1 is used, the sending UE may send a NACK feedback to the base station, and then the base station may schedule a resource for retransmission or new transmission of a corresponding SL process (for example, the SL process A), or a resource for new transmission or retransmission of another SL process.

Based on the DRX logic of the Uu interface, when the receiving UE successfully decodes the data, the retransmission timer of the SL process (which may be replaced with an "SL HARQ process") corresponding to the SL HARQ feedback/PSFCH that is not received by the sending UE is not enabled; otherwise, if the receiving UE unsuccessfully decodes the data, the retransmission timer is enabled.

It should be noted that, a reason why the sending UE receives no PSFCH (SL HARQ feedback) of the receiving UE includes, but is not limited to: The sending UE receives no PSFCH from the receiving UE due to a conflict (prioritization) between receiving the PSFCH and performing sending (for example, sending the PSFCH); the receiving UE sends no PSFCH due to a conflict between sending the PSFCH and performing uplink (UL) transmission; or the sending UE receives no PSFCH from the receiving UE due to a conflict on a side of the sending UE or the receiving UE.

In the foregoing implementation scenario, because of unsuccessfully receiving the SL process feedback/PSFCH, the sending UE does not know whether the receiving UE successfully decodes the corresponding data, that is, does not know whether the receiving UE enables the corresponding retransmission timer in the SL DRX. When the sending UE unsuccessfully receives the SL HARQ feedback/PSFCH, if a NACK feedback is sent to the base station, then when the sending UE receives a new transmission resource or a retransmission resource of another SL process, or new transmission resource configuration information (or resource allocation information) of the SL process A from the base station, because it is unknown whether the receiving UE enables the retransmission timer corresponding to the SL process A in the SL DRX and it is not determined whether the receiving UE is in an active time, if the new transmission/retransmission resource of the another SL process or the new transmission resource of the SL process A are used for data transmission, if an Rx does not enable the retransmission timer of the SL process A, the Rx may be in an inactive time (inactive time). Therefore, a packet loss may occur, that is, the receiving UE receives no new transmission data of the SL process A sent by the sending UE during running of the "retransmission timer corresponding to the SL process A", or no new transmission and retransmission data of the another SL process.

In another implementation, when the SCI sent by the sending UE indicates that the SL HARQ feedback is disabled, if the receiving UE successfully decodes the data based on the DRX logic of the Uu interface, a retransmission timer of an SL process (for example, the "SL process A") corresponding to the SCI for which the SL HARQ feedback is disabled is not enabled on the SL DRX; otherwise, the retransmission timer is enabled if the receiving UE unsuccessfully decodes the data. The SL HARQ feedback disabled means that the HARQ feedback of the SL process is disabled, and means that the receiving UE does not send a HARQ feedback for data scheduled based on the SCI.

In the foregoing implementation scenario, because the sending UE does not receive the SL HARQ feedback/PSFCH of the data scheduled based on the SCI, the sending UE does not know whether the receiving UE successfully decodes the corresponding data, that is, does not know whether the receiving UE enables the retransmission timer corresponding to the SL process A on the SL DRX, and therefore, may determine a new transmission resource or a retransmission resource of another SL process other than the SL process A. If the sending UE performs data transmission by using the new transmission/retransmission resource of the another SL process or an initial transmission resource of the SL process A, if the receiving UE does not enable the retransmission timer of the SL process A, the receiving UE may be in an inactive time (inactive time). Therefore, a packet loss may occur, that is, the receiving UE receives no new transmission data of the SL process A sent by the sending UE during running of the "retransmission timer corresponding to the SL process A", or no new transmission and retransmission data of the another SL process.

Based on the foregoing several implementations, this application provides several sidelink transmission methods, to resolve the problem in the foregoing implementations. The following describes the embodiments of this application based on FIG. 1 and FIG. 2 and with reference to corresponding accompanying drawings.

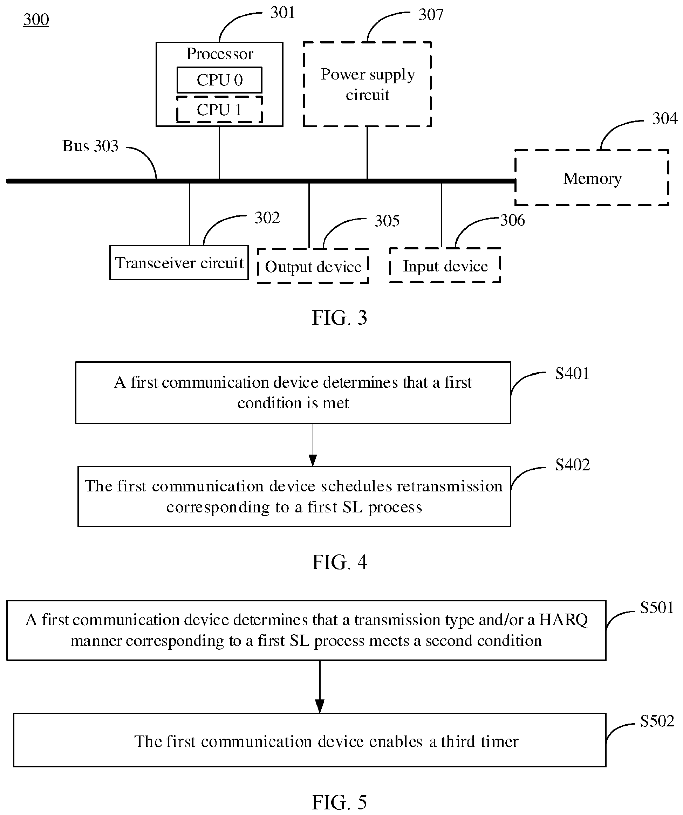

All the devices such as the user equipment and the network device that are shown in FIG. 1 may use a composition structure shown in FIG. 3 or include a component shown in FIG. 3. FIG. 3 is a schematic composition diagram of an apparatus 300 according to an embodiment of this application. The apparatus 300 may be user equipment or a network device, or a chip or a system-on-a-chip in user equipment or a network device. As shown in FIG. 3, the apparatus 300 includes a processor 301, a transceiver circuit 302, and a bus 303. Further, the apparatus 300 may further include a memory 304. The processor 301, the memory 304, and the transceiver circuit 302 may be connected by using a bus 303.

It should be understood that the processor 301 in this embodiment of this application may be, for example, a central processing unit (central processing unit, CPU), a general purpose network processor (network processor, NP), a digital signal processor (digital signal processing, DSP), a microprocessor, a microcontroller, a programmable logic device (programmable logic device, PLD), an application-specific integrated circuit (application specific integrated circuit, ASIC), a field programmable gate array (field programmable gate array, FPGA) or another programmable logic device, a discrete gate or transistor logic device, or a discrete hardware component. The general purpose processor may be a microprocessor, any conventional processor, or the like. Alternatively, the processor 301 may be another apparatus having a processing function, such as a circuit, a device, or a software module. Details are not limited.

The transceiver circuit 302 is configured to communicate with another device or another communication network. The another communication network may be an Ethernet, a radio access network (radio access network, RAN), a wireless local area network (wireless local area networks, WLAN), or the like. The transceiver circuit 302 may be a module, a circuit, a transceiver, or any apparatus that can implement communication. The transceiver circuit 302 may be configured to: receive program instructions and transmit the program instructions to the processor. Alternatively, the transceiver circuit 302 may be configured to perform communication exchange between the apparatus 300 and another communication device, for example, exchange control signaling and/or service data. The transceiver circuit 302 may be a code and/or data read/write transceiver circuit, or the transceiver circuit 302 may be a signal transmission transceiver circuit between a communication processor and a transceiver.

The bus 303 is configured to transmit information between components included in the apparatus 300.

The memory 304 is configured to store instructions. The instructions may be a computer program.

The memory 304 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. Details are not limited.

It should be noted that the memory 304 may exist independently of the processor 301, or may be integrated together with the processor 301. The memory 304 may be configured to store instructions, program code, some data, or the like. The memory 304 may be located inside the apparatus 300, or may be located outside the apparatus 300. Details are not limited. The processor 301 is configured to execute the instructions stored in the memory 304, to perform a method provided in the following embodiment of this application.

In an example, the processor 301 may include one or more CPUs, such as a CPU 0 and a CPU 1 in FIG. 3.

In an optional implementation, the apparatus 300 further includes an output device 305 and an input device 306. For example, the input device 306 is a device such as a keyboard, a mouse, a microphone, or a joystick, and the output device 305 is a device such as a display or a speaker (speaker).

In an optional implementation, the apparatus 300 may further include a power supply circuit 307. The power supply circuit 307 may be configured to supply power to the processor 301. The power supply circuit 307 may be located in a same chip as the processor 301, or may be located in another chip other than a chip in which the processor 301 is located.

The power supply circuit 307 in this embodiment of this application includes, but is not limited to, at least one of the following: a power supply line, a power supply subsystem, a power management chip, a power consumption management processor, or a power consumption management control circuit.

It should be noted that the apparatus 300 may be a desktop computer, a portable computer, a network server, a mobile phone, a tablet computer, a wireless terminal, an embedded device, a chip system, or a device with a structure similar to that in FIG. 3. In addition, the composition structure shown in FIG. 3 does not constitute a limitation on the terminal. In addition to the components shown in FIG. 3, the terminal may include more or fewer components than those shown in the figure, or combine some components, or have different component layouts.

In this embodiment of this application, the chip system may include a chip, or may include a chip and another discrete device.

For example, the foregoing apparatus 300 may be a chip system. As shown in FIG. 3, the chip system may include at least one or more processors and a transceiver circuit. The program instructions used in the method in this embodiment of this application is executed in the one or more processors, so that the chip system implements the sidelink transmission method in this application.

In addition, for actions, terms, and the like in the embodiments of this application, refer to each other. Details are not limited. In the embodiments of this application, names of messages exchanged between devices, names of parameters in the messages, or the like are merely examples. Another name may alternatively be used during specific implementation. Details are not limited.

It should be noted that an entity for executing the method is not limited in this embodiment of this application. The entity may be a terminal, a function module in a terminal, a chip system, or the like. Details are not limited. In this embodiment of this application, a terminal apparatus is used as an example to describe the method provided in this embodiment of this application.

Next, the network architecture shown in FIG. 1 is used as an example to describe the sidelink transmission method provided in the embodiments of this application. A communication apparatus in the following embodiments may have the component shown in FIG. 3.

Embodiments of this application provide a sidelink multicast or broadcast service transmission method that is based on a DRX mechanism. In an implementation in which conditions of and enabling occasions for enabling a retransmission timer between sending UE and at least one receiving UE are unified, or in an implementation in which DRX information parameters between sending UE and at least one receiving UE are unified, packet losses of some receiving UEs can be avoided, thereby resolving a problem of reliability of sidelink multicast or broadcast data transmission.

This application provides a plurality of SL multicast and broadcast DRX methods. The following separately describes the methods by using the following embodiments. Some of the SL multicast and broadcast DRX methods are only for some procedures in an SL multicast and broadcast DRX mechanism, and some may be applied to any one or more procedures in the SL multicast and broadcast DRX mechanism. It should be understood that the SL multicast and broadcast DRX methods may be used in combination. For example, one method may be used in a procedure in the SL multicast and broadcast DRX mechanism, and another method may be used in another procedure, or both one method and another method may be used in a procedure in the SL multicast and broadcast DRX mechanism.

It should be understood that the SL multicast and broadcast DRX mechanism may change with evolution of the technical solutions, and the technical solutions provided in this application are not limited to a process described below. Further, descriptions of a scenario in the embodiments of this application are merely an example, and does not limit the solutions in the embodiments of this application to be only used in the described scenario. The solutions in the embodiment of this application are also applicable to a scenario with a similar problem and the like.

An example in which a first communication device is sending UE and a second communication device is receiving UE is used below, to separately describe different implementations of the sidelink transmission method provided in the embodiments of this application. The following uses, for description, an example in which the method is applied to a communication device (such as the first communication device or the second communication device). It is easy to understand that the following method may also be applied to a component of the communication device, such as a chip, a processor, or a chip system.

An embodiment of this application provides a sidelink transmission method, applied to a first communication device (sending UE). As shown in FIG. 4, the method may include the following steps.

S401: The first communication device determines that a first condition is met.

For a multicast service, the first communication device and each receiving UE in a multicast service group may separately maintain a set of SL DRX information, and the SL DRX information may specifically include at least one DRX information parameter described above. The multicast service may include a plurality of SL processes, for example, include a first SL process. The first communication device may transmit, to a multicast group in the first SL process, a TB block corresponding to the multicast service.

In an implementation, the SL process may include an SL HARQ process.

That the first communication device determines that a first condition is met may specifically include: determining, by the first communication device, that at least one of the following conditions is met: A first timer corresponding to DRX is not running, a second timer corresponding to DRX is not running, or a third timer corresponding to the first SL process is running. The first timer, the second timer, and the third timer may be timers related to the DRX information. In addition, the third timer may alternatively be a timer related to the SL HARQ process.

The DRX information may correspond to a first multicast destination destination, may correspond to a first multicast service, or may correspond to a first multicast group. The first multicast group may include the sending UE, in other words, the first communication device, and a plurality of receiving UEs.

In an implementation, the first condition may include: receiving a NACK that is corresponding to the first SL process and that is from at least one user equipment.

The NACK corresponding to the first SL process is used to indicate that at least one receiving UE requests the first communication device to perform retransmission. Alternatively, the NACK corresponding to the first SL process is used to indicate that at least one user equipment unsuccessfully decodes a data packet corresponding to the first SL process.

S402: The first communication device schedules retransmission corresponding to the first SL process.

In an implementation, if determining that the third timer corresponding to the first SL process is running, the first communication device schedules retransmission and/or new transmission corresponding to the first SL process.

Further, that the first communication device schedules retransmission corresponding to the first SL process may specifically include: The first communication device can schedule only retransmission corresponding to the first SL process, and cannot schedule retransmission or new transmission of another SL process corresponding to the multicast service, the DRX, or the destination.

The third timer is used to indicate information about a time in which the first communication device may schedule SL retransmission corresponding to the first SL process. In other words, during running of the third timer, the first communication device may schedule the first SL process to perform corresponding first SL HARQ retransmission.

Alternatively, the third timer may be used to indicate longest duration required by a receive end of the first communication device to receive resource configuration information, authorization information, or sidelink control information (sidelink control information, SCI) of SL retransmission corresponding to the first SL process. The resource configuration information of SL retransmission is used to indicate that the first communication device may perform SL retransmission on a time-frequency resource. The receive end of the first communication device may be a receiving device, for example, a second communication device, that is of the first communication device and that performs a unicast service, a multicast service, a broadcast service, or the like. Details are not described below again. The second communication device may receive a resource configuration of HARQ retransmission, authorization information of HARQ retransmission, or the SCI corresponding to the first SL process.

For example, the third timer may be specifically the foregoing drx-RetransmissionTimer retransmission timer, and is used to indicate a time period in which the first communication device may schedule retransmission of the first SL HARQ process. In this case, before drx-RetransmissionTimer expires, the first communication device may schedule retransmission corresponding to the first SL process.

It should be noted that, the SL HARQ process in this embodiment of this application may also be replaced with an SL process.

In an implementation, if determining that the first timer corresponding to the DRX is not running, and that the third timer corresponding to the first SL process is running, the first communication device may schedule retransmission corresponding to the first SL process.

The first timer may be used to indicate information about a time in which the first communication device may send the SCI in a DRX cycle. In an implementation, the first timer may be used to indicate duration for which the first communication device may send the SCI in the DRX cycle, and the information about the time from the first timer may include a cyclic time period in which the SCI can be sent and that is in the DRX cycle. For example, if the first communication device does not send the SCI before the first timer expires, the first communication device may enter a sleep state and no longer send the SCI.

Alternatively, the first timer may be used to indicate information about a time in which the receive end of the first communication device performs listening in the DRX cycle. For example, the first timer may be used to indicate duration for which the receive end of the first communication device listens on a PDCCH in the DRX cycle. For example, if the receive end of the first communication device obtains no PDCCH through listening before the first timer expires, the receive end of the first communication device may enter a sleep state, and no longer listen on the PDCCH.

For example, as shown in FIG. 2, the first communication device may enable the first timer in the DRX cycle, and the first communication device may listen on the PDCCH in the first timer. After obtaining the PDCCH through listening, the first communication device may enable drx-InactivityTimer, to indicate duration for which the first communication device may continue listening on the PDCCH.

In an implementation, the first timer may be specifically drx-onDurationTimer, used to indicate that the receive end of the first communication device enables a timer in an active state in the DRX cycle, and the receive end of the first communication device can listen on the PDCCH in the timer.

In an implementation, if determining that the second timer corresponding to the DRX is not running, and that the third timer corresponding to the first SL process is running, the first communication device schedules retransmission corresponding to the first SL process.

The second timer may be used to indicate duration for which the first communication device may continue to send another piece of SCI after sending the SCI. For example, if the first communication device may enable the second timer after sending the SCI, the first communication device may send the another piece of SCI before the second timer expires.

Alternatively, the second timer may be used to indicate information about a time in which the receive end of the first communication device continues to perform listening after receiving the SCI. For example, if the receive end of the first communication device may enable the second timer after receiving the SCI, the receive end of the first communication device may continue to listen on the PDCCH before the second timer expires.

In an implementation, the second timer may be specifically drx-InactivityTimer, used to indicate duration for which the receive end of the first communication device further needs to continue listening on a PDCCH after successfully decoding a PDCCH for scheduling new transmission. Therefore, the receive end of the first communication device listens on the PDCCH during running of the timer.

In an implementation, if the first communication device determines that neither the first timer nor the second timer corresponding to the DRX is running, and that the third timer corresponding to the first SL process is running, the first communication device schedules only retransmission corresponding to the first SL process.

In the foregoing implementation, the first communication device can schedule only retransmission corresponding to the SL process in which the third timer is running, and cannot schedule another SL process, other than the first SL process, corresponding to the DRX to perform retransmission and/or new transmission, to avoid a packet loss of receiving UE that does not enable the third timer or is not in an active state, thereby improving sidelink transmission reliability.

In an implementation, if the first communication device determines that the third timer corresponding to the first SL process is running, but that a third timer corresponding to another SL process, other than the first SL process, corresponding to the DRX is not running, the first communication device schedules retransmission corresponding to the first SL process, and the first communication device cannot schedule the another SL process, other than the first SL process, corresponding to the DRX to perform retransmission and/or new transmission.

In an implementation, if the first communication device determines that the third timer corresponding to the first SL process is running and that a third timer corresponding to a second SL process is running, the first communication device may schedule only retransmission corresponding to the first SL process and retransmission corresponding to the second SL process.

In the foregoing implementation of this application, when determining that only retransmission timers corresponding to one or more SL HARQ processes are running, the sending UE schedules only retransmission corresponding to the one or more SL HARQ processes. In other words, the sending UE cannot schedule retransmission or new transmission of another SL HARQ process (the retransmission timer is not running) corresponding to the SL multicast DRX, to avoid a packet loss of receiving UE whose at least one retransmission timer is not running or that is not in an active state, thereby improving reliability of sidelink multicast or broadcast data transmission.

Further, in the foregoing implementations, if the first SL process corresponds to an SL multicast service, and a HARQ feedback of the SL multicast service is the foregoing HARQ manner 2, the first communication device determines that a quantity of NACKs in the HARQ feedback corresponding to the first SL process is less than a quantity, minus 1, of devices in the first multicast group corresponding to the first SL process, and schedules retransmission corresponding to the first SL process.

The quantity of NACKs includes a quantity of HARQ retransmission requests.

The quantity of devices in the first multicast group is a total quantity of devices of the sending UE and the plurality of receiving UEs in the first multicast group. In other words, when the first communication device may determine that the quantity of NACK feedbacks corresponding to the first SL process is less than a total quantity of devices of the receiving UEs, it indicates that at least one receiving UE may not enable the third timer corresponding to the first SL process. Therefore, in this case, only retransmission corresponding to the first SL process is scheduled.

In the foregoing implementation of this application, the sending UE determines the first SL HARQ process based on a quantity of NACK feedbacks corresponding to the first SL HARQ process. If at least one receiving UE in a multicast group unsuccessfully decodes data or feeds back a NACK, and not all receiving UEs feed back a NACK, the sending UE schedules only retransmission corresponding to the first SL HARQ process, and the sending UE cannot schedule retransmission or new transmission of another SL HARQ process in which the third timer is not running and that is corresponding to the SL multicast DRX, to avoid a packet loss of the receiving UE that does not feed back the NACK or does not enable the third timer.

In a possible manner, for example, in a DRX mechanism of a Uu interface and a HARQ mechanism, if a network device determines that a retransmission timer corresponding to a HARQ process of the user equipment is running, the network device may schedule retransmission or new transmission of another HARQ process to the user equipment. Therefore, in the foregoing implementation of this application, a packet loss caused because the sending UE does not know whether all the receiving UEs enable the retransmission timer can be avoided, and reliability of sidelink multicast or broadcast data transmission can be improved.

In addition, in an implementation, the first communication device determines that at least one of the following conditions is met: A first timer corresponding to DRX is running, or a second timer corresponding to DRX is running, or a third timer corresponding to the first SL process is running, and the first communication device performs retransmission and/or new transmission in the first SL process.

In an implementation, when the first communication device receives at least one NACK corresponding to the first SL process, and the third timer corresponding to the first SL process is running, at least one receiving UE unsuccessfully decodes a data packet corresponding to the first SL process. Alternatively, the first communication device determines that at least one of the first timer or the second timer corresponding to the DRX is running. In other words, when the first communication device determines that receiving UE corresponding to the DRX is in an active state and listens to SCI, the first communication device may schedule retransmission of the first SL process, or the first communication device may schedule new transmission of the first SL process. Alternatively, if the first communication device determines that at least one of the first timer or the second timer corresponding to the DRX is running, and that the third timer corresponding to the first SL process is running, the first communication device may schedule the first SL process for retransmission, or the first communication device may schedule the first SL process for new transmission. Alternatively, if the first communication device determines that neither the first timer nor the second timer (if any) corresponding to the DRX is running, and that the third timer corresponding to the first SL process is running, the first communication device may schedule retransmission or new transmission of the first SL process. Alternatively, if the first communication device determines that at least one of the first timer or the second timer (if any) corresponding to the DRX is running, and that the third timer corresponding to the first SL process is not running, the first communication device may schedule retransmission or new transmission of the first SL process.

In contrast, if the first communication device determines that the third timer corresponding to the first SL process is not running, and the first communication device determines that neither the first timer nor the second timer (if any) corresponding to the DRX is running, retransmission or new transmission of the first SL process is not scheduled. In this implementation, the sending UE may prevent the receiving UE from lose a packet.

For example, the DRX may correspond to a first multicast destination, a first multicast service, or a first multicast group. In this case, that the first communication device performs retransmission and/or new transmission in the first SL process may include: The first communication device may perform retransmission and/or new transmission corresponding to the first multicast destination, the first multicast service, or the first multicast group in the SL process.

In addition, in an implementation, if the first communication device determines that all receiving UEs corresponding to the multicast service or the multicast group enable the third timer, the first communication device may perform retransmission or new transmission in any SL process corresponding to the multicast service or the multicast group.

Specifically, if the first communication device determines that the NACK is received on all PSFCHs corresponding to the first SL process, and that the third timer corresponding to the first SL process is running, the first communication device may perform transmission in at least one SL process of the DRX corresponding to the SL process, or the first communication device may perform transmission in any SL process of the DRX corresponding to the SL process.

For example, that the first communication device determines that the NACK is received on all PSFCHs corresponding to the first SL process may be that the first communication device receives the NACK on each of K PSFCHs corresponding to the first SL process. K may be a total quantity of PSFCH resources corresponding to the first SL process.

Alternatively, the first communication device determines that the third timer corresponding to the first SL process is running. If the first SL process corresponds to SL multicast and a HARQ manner 2, and a quantity of NACKs corresponding to the first SL process is a quantity, minus 1, of devices in the first multicast group corresponding to the first SL process, that is, the quantity of NACKs that are corresponding to the first SL process and that are received by the first communication device is equal to a quantity of all receiving devices in the first multicast group, the first communication device may perform transmission in any SL process of the DRX corresponding to the SL process. The quantity of NACKs corresponding to the first SL process may be a quantity of NACKs received by the first communication device in the first SL process.

In an implementation of this application, for a multicast service, if a quantity of sending devices in the multicast group is 1, the quantity, minus 1, of devices in the first multicast group is the quantity of all receiving devices in the first multicast group. Details are not described below again.

In the foregoing implementation, when the sending UE determines that all the receiving UEs corresponding to the multicast service enable the retransmission timer, the sending UE may randomly schedule another SL process for transmission, so that a packet loss of the receiving UE of the SL multicast is avoided while the receiving UE can reduce power consumption.

An embodiment of this application provides a sidelink transmission method. As shown in FIG. 5, the method may include the following steps.

S501: A first communication device determines that a transmission type and/or a HARQ manner corresponding to a first SL process meets a second condition.

The transmission type may include at least one of unicast, multicast, or broadcast.

As described above, the HARQ manner may be a manner 1 or a manner 2. The manner 1 is used to indicate that a feedback corresponding to an SL HARQ process includes a NACK, that is, receiving UE feeds back the NACK only when unsuccessfully decoding data. The manner 2 is used to indicate that the feedback corresponding to the SL HARQ process includes an ACK or a NACK, that is, the receiving UE performs HARQ feedback regardless of whether the receiving UE successfully decodes the data. Details are not described herein again.

S502: The first communication device enables a third timer.

In an implementation, that the first communication device determines that a transmission type and/or a HARQ manner corresponding to a first SL process meets a second condition includes: The transmission type corresponding to the first SL process is multicast, the HARQ manner is the manner 2, and the first communication device receives a NACK corresponding to the first SL process. In this case, the first communication device performs step 502 to enable the third timer.

In an implementation, that the first communication device determines that a transmission type and/or a HARQ manner corresponding to a first SL process meets a second condition includes: The transmission type corresponding to the first SL process is multicast, the HARQ manner is the manner 2, and a quantity of ACKs/NACKs or HARQ feedbacks that are corresponding to the first SL process and that are received by the first communication device is less than or equal to a quantity, minus 1, of devices in a first multicast group. In this case, the first communication device performs step 502 to enable the third timer.

In an implementation, that the first communication device determines that a transmission type and/or a HARQ manner corresponding to a first SL process meets a second condition includes: The first communication device determines that the transmission type corresponding to the first SL process is unicast, and the first communication device receives a NACK feedback corresponding to the first SL process. In this case, the first communication device performs step 502 to enable the third timer.

In an implementation, that the first communication device determines that a transmission type and/or a HARQ manner corresponding to a first SL process meets a second condition includes: The first communication device determines that the transmission type corresponding to the first SL process is multicast, the HARQ manner is the manner 1, and the first communication device receives a NACK feedback corresponding to the first SL process. In this case, the first communication device performs step 502 to enable the third timer.

In other words, sending UE may enable the third timer when determining, based on the transmission type and/or the HARQ manner, that the at least one NACK feedback corresponding to the first SL process is received.

The third timer is used to indicate information about a time in which the first communication device may schedule SL retransmission corresponding to the first SL process. In other words, during running of the third timer, the first communication device may schedule retransmission of the first SL process.

In this application, a quantity, minus 1, of devices in a multicast group may alternatively be replaced with a quantity of receiving devices in the first multicast group.

In an implementation, that the first communication device determines that a transmission type and/or a HARQ manner corresponding to a first SL process meets a second condition includes: The transmission type corresponding to the first SL process is multicast, the HARQ manner is the manner 2, and the total quantity of HARQ feedbacks that are corresponding to the first SL process and that are received by the first communication device is less than the quantity of receiving devices in the first multicast group.

For an SL multicast HARQ manner 2, the HARQ feedback corresponding to the first SL process may be an ACK or a NACK. In this case, when all the HARQ feedbacks corresponding to the first SL process are ACKs, the total quantity of HARQ feedbacks corresponding to the first SL process may be a quantity of all the ACKs. When all the HARQ feedbacks corresponding to the first SL process are NACKs, the total quantity of HARQ feedbacks corresponding to the first SL process may be a quantity of all the NACKs. When the HARQ feedbacks corresponding to the first SL process include an ACK and a NACK, the total quantity of HARQ feedbacks corresponding to the first SL process may be the quantity of all the ACKs plus the quantity of all the NACKs.

In an implementation, that the first communication device determines that a transmission type and/or a HARQ manner corresponding to a first SL process meets a second condition includes: The transmission type corresponding to the first SL process is multicast, the HARQ manner is the manner 2, and the quantity of all ACKs that are corresponding to the first SL process and that are received by the first communication device is less than the quantity of receiving devices in the first multicast group corresponding to the first SL process.

In other words, the first communication device may receive no SL HARQ feedbacks from all receiving UEs corresponding to a multicast service, that is, at least one receiving UE unsuccessfully transmits the feedback corresponding to the first SL process, or the first communication device receives no SL HARQ feedback from at least one receiving UE. Therefore, in this case, the sending UE determines to enable the third timer, and the first communication device can schedule, during running of the third timer, retransmission corresponding to the first SL process, to avoid a packet loss of any receiving UE, thereby improving data transmission reliability.

In another implementation, that the first communication device enables a third timer may include: If determining that a fourth timer corresponding to the first SL process expires, the first communication device enables the third timer. The fourth timer is used to indicate information about a time before resource configuration information, authorization information, or SCI expected to be used for SL retransmission reaches a receive end, or is used to indicate information about a time before the first communication device schedules retransmission corresponding to the first SL process.

Further, the fourth timer may be used to indicate shortest duration before the resource configuration information, the authorization information, or the SCI expected to be used for SL retransmission reaches the receive end, or is used to indicate shortest duration before the first communication device schedules retransmission corresponding to the first SL process.

For example, the fourth timer may be specifically drx-HARQ-RTT-Timer, used to indicate shortest duration for which the sending UE needs to wait before sending expected retransmission data.

In other words, if the fourth timer, for example, drx-HARQ-RTT-Timer, is introduced to a sidelink multicast or broadcast service, after determining that the fourth timer drx-HARQ-RTT-Timer expires, the first communication device may enable the third timer, for example, drx-RetransmissionTimer, when the foregoing condition is met, to perform HARQ retransmission.

In the foregoing implementation, that the first communication device determines that a transmission type and/or a HARQ manner corresponding to a first SL process meets a second condition may further include: If determining that a quantity of times of retransmission of the first SL process is less than a preset threshold, the first communication device may enable a third timer. The preset threshold is a maximum quantity of times of retransmission that is configured by a network, determined by the UE, specified in a protocol, or pre-configured and that corresponds to the first SL process. In this embodiment of this application, a specific value or configuration manner of the preset threshold is not specifically limited.

In an implementation, the first communication device determines that the transmission type and/or the HARQ manner corresponding to the first SL process meets the second condition, and if the first communication device determines that the quantity of times of retransmission corresponding to the first SL process reaches the preset threshold, disables the third timer corresponding to the first SL process.

In an implementation, that the first communication device determines that a transmission type and/or a HARQ manner corresponding to a first SL process meets a second condition, and if determining that the quantity of times of retransmission corresponding to the first SL process is greater than or equal to the preset threshold, the first communication device does not enable the third timer corresponding to the first SL process.

Based on a receive side device of the first communication device in the foregoing implementation, for example, a second communication device, for the first SL process, for example, a HARQ of the second communication device is in an enabled state, if the second communication device determines that a data packet corresponding to the first SL process is not successfully decoded, or if the second communication device sends the NACK corresponding to the first SL process to the first communication device, the third timer corresponding to the first SL process is enabled.

In addition, if the fourth timer, for example, drx-HARQ-RTT-Timer, is introduced to the sidelink multicast or broadcast service, after determining that the data packet corresponding to the first SL process is not successfully decoded, and determining that the fourth timer drx-HARQ-RTT-Timer expires, the second communication device enables the third timer, for example, drx-RetransmissionTimer.

In the foregoing implementation of this application, the sending UE may determine, based on the transmission type of SL transmission and the multicast HARQ manner, a condition for enabling a retransmission timer. In this case, different SL transmission scenarios match conditions for enabling corresponding retransmission timers. This improves sidelink transmission flexibility and sidelink transmission performance while power consumption of an SL receiving device is reduced, avoids a packet loss, and improves transmission reliability.

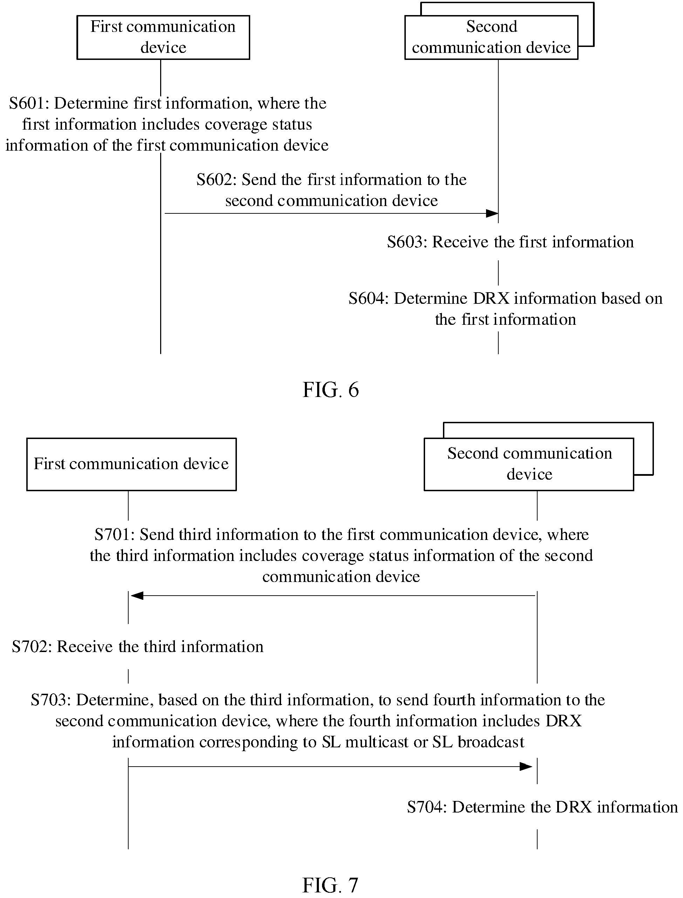

An embodiment of this application provides a sidelink transmission method, applied to a first communication device and a second communication device. As shown in FIG. 6, the method may include the following steps.

S601: The first communication device determines first information, where the first information includes coverage status information of the first communication device.

The coverage status information included in the first information may be used to indicate a current network coverage status of the first communication device.

The coverage status may include in coverage (in coverage, IC) and out of coverage (out coverage, OCC). The out of coverage state may further include at least one of first out of coverage OCC 1, second out of coverage OCC 2, or third out of coverage OCC 3.

The in coverage may be used to indicate that the first communication device may obtain DRX configuration information from a base station.

In an implementation, the in coverage may be further used to indicate that the first communication device may detect, at a frequency configured for SL communication, at least one cell that meets a third condition. That the third condition is met may include at least one of the following: A criterion S is met, a cell selection condition is met, or signal strength meets a preset threshold.

That UE meets the criterion S may indicate that at least one signal strength value obtained by the UE by measuring the cell is higher than a preset threshold. Signal strength may include a measured cell receive level value (Measured cell Receive level value), a measured cell quality value (Measured cell quality value), a reference signal received power (reference signal received power, RSRP), or reference signal received quality (reference signal received quality, RSRQ).

The first out of coverage OCC 1 is used to indicate that the first communication device cannot obtain DRX information from the base station, or is used to indicate that the first communication device detects, at the frequency configured for SL communication, no cell that meets the third condition.

The second out of coverage OCC 2 is used to indicate that the first communication device may obtain the DRX configuration information from a core network device or a policy control function (Policy Control Function, PCF) network element, and that the first out of coverage condition is met. The third out of coverage OCC 3 is used to indicate that the first communication device cannot obtain the DRX configuration information from the core network device or the PCF network element, and that the first out of coverage condition is met.

For example, when user equipment is in the state of the OOC 3, if the user equipment has previously obtained SL multicast or broadcast DRX information from the core network device or the PCF network element, the user equipment may use the DRX information; otherwise, if the user equipment has not previously obtained SL multicast or broadcast DRX information from the core network device or the PCF network element, the user equipment may use the SL multicast or broadcast DRX information in a mobile entity (mobile entity, ME) or a universal integrated circuit card (universal integrated circuit card, UICC).

In an implementation of this application, that the user equipment uses the SL multicast or broadcast DRX information obtained from an ME or a UICC may also be equivalent to that the user equipment uses pre-configured DRX information.

In an implementation, when being in the state of the OOC 2, the user equipment may obtain updated SL multicast or broadcast DRX configuration information from the core network device or the PCF network element. A manner of obtaining the updated SL multicast or broadcast DRX configuration information may include: When a preset condition is met, the UE actively requests the core network device or the PCF network element to update the SL multicast or broadcast DRX configuration information. For example, the foregoing second communication device may send second information to a network device, to request the network device to deliver the SL multicast or broadcast DRX configuration information. Alternatively, when a preset condition is met, the core network actively updates the SL multicast or broadcast DRX information to the UE.

S602: The first communication device sends the first information to the second communication device.

S603: The second communication device receives the first information.

S604: The second communication device determines the DRX information based on the first information.

The second communication device may determine, based on the coverage status information of the first communication device included in the first information, whether a coverage status of the first communication device is consistent with that of the second communication device, to determine the DRX information or determine a source of the used DRX information.

In an implementation, the first information may further include the DRX information corresponding to SL multicast or SL broadcast of the first communication device.

Further, that the second communication device may determine, based on the coverage status information of the first communication device included in the first information, whether a coverage status of the first communication device is consistent with that of the second communication device, to determine the DRX information may specifically include: If the coverage status information of the first communication device is consistent with coverage status information of the second communication device, the second communication device does not use or ignores the DRX information that corresponds to the SL multicast or the SL broadcast and that is received from the first communication device.

It should be noted that, when the coverage status information includes two types: the in coverage and the out of coverage (the first out of coverage), determining that the coverage status of the first communication device is consistent with that of the second communication device may specifically include: determining that both the coverage status of the first communication device and the coverage status of the second communication device are the in coverage, or determining that both the coverage status of the first communication device and the coverage status of the second communication device are the out of coverage, in other words, determining that the coverage status of the first communication device is consistent with that of the second communication device.

When the coverage status information includes the in coverage, the second out of coverage, and the third out of coverage, determining that the coverage status of the first communication device is consistent with that of the second communication device may specifically include: determining that both the coverage status of the first communication device and the coverage status of the second communication device are the in coverage, determining that both the coverage status of the first communication device and the coverage status of the second communication device are the second out of coverage, or determining that both the coverage status of the first communication device and the coverage status of the second communication device are the third out of coverage, in other words, determining that the coverage status of the first communication device is consistent with that of the second communication device.

On the contrary, that the coverage status of the first communication device is inconsistent with that of the second communication device is also determined based on a case included in the coverage status information. For example, when the coverage status information includes two types: the in coverage and the out of coverage, that one of the coverage status of the first communication device and the coverage status of the second communication device is the in coverage and the other is the out of coverage is determined to be inconsistent, and whether the out of coverage is the second out of coverage or the third out of coverage is no longer determined. When the coverage status of the first communication device is the in coverage, and the coverage status of the second communication device is the second out of coverage, it may be determined that the coverage status of the first communication device is inconsistent with that of the second communication device. When the coverage status of the first communication device is the second out of coverage, and the coverage status of the second communication device is the third out of coverage, it may be determined that the coverage status of the first communication device is inconsistent with that of the second communication device. Details are not described herein again.

In an implementation, that the second communication device determines the DRX information based on the first information may specifically include: if the coverage status information of the first communication device is inconsistent with the coverage status information of the second communication device, using the DRX information that corresponds to the SL multicast or the SL broadcast and that is received from the first communication device.

In an implementation, that the second communication device determines the DRX information based on the first information may specifically include: If the second communication device determines that the coverage status of the second communication device is the second out of coverage, and determines, based on the first information, that the coverage status information of the first communication device is the in coverage, the second communication device sends second information to the network device, where the second information is used to request the DRX information corresponding to the SL multicast or the SL broadcast from the network device.

In the foregoing implementation, the second communication device may determine, based on the coverage status information of the first communication device, whether to use the DRX information that is corresponding to the SL multicast or the SL broadcast and that is sent by the first communication device, so that sending UE and receiving UE use the consistent DRX information, to avoid a packet loss of the receiving UE in an SL multicast or broadcast service, thereby improving data transmission reliability.

In addition, an embodiment of this application provides a sidelink transmission method, applied to a first communication device and a second communication device. As shown in FIG. 7, the method may include the following steps.

S701: The second communication device sends third information to the first communication device, where the third information includes coverage status information of the second communication device.

S702: The first communication device receives the third information.

S703: The first communication device determines, based on the third information, to send fourth information to the second communication device, where the fourth information includes DRX information corresponding to SL multicast or SL broadcast.

That the first communication device determines, based on the third information, to send fourth information to the second communication device may specifically include: if the first communication device determines that the coverage status information of the second communication device is inconsistent with coverage status information of the first communication device, sending the fourth information to the second communication device.

If determining that the coverage status information of the second communication device is consistent with the coverage status information of the first communication device, the first communication device does not send the fourth information to the second communication device.

S704: The second communication device determines the DRX information.

In an implementation, the second communication device may determine, based on locally pre-configured information or information obtained from a base station, a core network device, or a PCF network element, the DRX information corresponding to the SL multicast or the SL broadcast.

In addition, in an implementation, if receiving the fourth information from the first communication device, the second communication device may determine, based on the fourth information, the DRX information corresponding to the SL multicast or the SL broadcast. For example, DRX information in the fourth information may be used as the DRX information corresponding to the SL multicast or the SL broadcast, or the DRX information corresponding to the SL multicast or the SL broadcast may be determined based on DRX information in the fourth information.

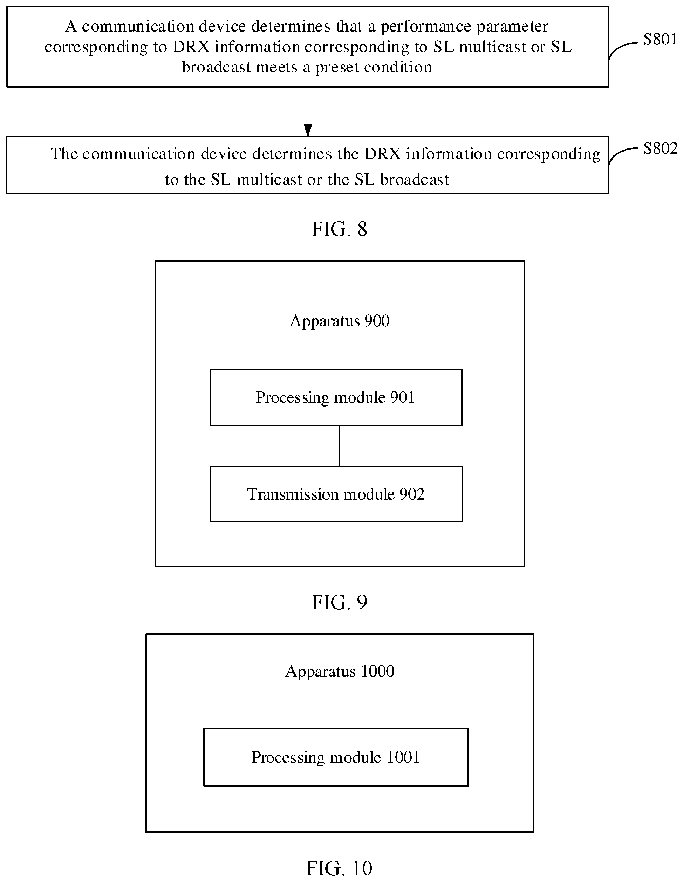

In addition, this application further provides a sidelink transmission method. A sending device or a receiving device corresponding to a multicast or broadcast service may separately determine, based on receiving performance corresponding to currently used DRX information, a source of DRX information corresponding to SL multicast or SL broadcast. As shown in FIG. 8, the method may include the following steps.

S801: A communication device determines that a performance parameter corresponding to the DRX information corresponding to the SL multicast or the SL broadcast meets a preset condition.

For a receive end of the SL multicast or the SL broadcast, the second communication device is used as an example, and the performance parameter corresponding to the DRX information may be receiving performance corresponding to the DRX information, for example, may specifically include at least one of a latency parameter, a data transmission rate, or the like.

Further, that a second communication device determines that a performance parameter corresponding to the DRX information corresponding to the SL multicast or the SL broadcast meets a preset condition may specifically mean that transmission performance corresponding to the DRX information is less than a preset threshold, that is, data transmission performance corresponding to the currently used DRX information is relatively poor.

For example, that a communication device determines that a performance parameter corresponding to the DRX information corresponding to the SL multicast or the SL broadcast meets a preset condition may specifically include: The second communication device determines that the latency parameter corresponding to the DRX information is greater than or equal to a preset first threshold. Alternatively, the communication device determines that the data transmission rate corresponding to the DRX information is less than or equal to a preset second threshold. A specific parameter configuration of the first threshold or the second threshold is not specifically limited in this embodiment of this application.

For a transmit end of the SL multicast or the SL broadcast, the first communication device is used as an example, and the performance parameter corresponding to the DRX information may be a quantity of DTX corresponding to the DRX information, a quantity of received NACKs, a retransmission request, or the like.

S802: The communication device determines the DRX information corresponding to the SL multicast or the SL broadcast.

In other words, the first communication device or the second communication device may determine that the parameter corresponding to the current DRX information corresponding to the SL multicast or the SL broadcast meets the preset condition, to determine to switch different DRX information corresponding to the SL multicast or the SL broadcast, for example, use pre-configured DRX information, or use DRX information obtained from a core network device or a PCF network element.

In an implementation, when the communication device determines that the performance parameter corresponding to the DRX information meets the preset condition, the communication device may specifically and comprehensively determine, with reference to the DRX information corresponding to the SL multicast or the SL broadcast and based on current coverage status information, the DRX information corresponding to the SL multicast or the SL broadcast.

Further, for receiving UE of an SL multicast or broadcast service, the second communication device is used as an example, the following may be specifically included.

If the second communication device determines that a current coverage status is in coverage, and the performance parameter corresponding to the DRX information meets the preset condition, the second communication device may use the pre-configured DRX information corresponding to the SL multicast or the SL broadcast, to keep consistent with DRX information of sending UE such as the first communication device as much as possible.

Alternatively, if the second communication device determines that a current coverage status is in coverage, and the performance parameter corresponding to the DRX information meets the preset condition, the second communication device may use the DRX information that is corresponding to the SL multicast or the SL broadcast and that is obtained from the core network device or the PCF network element, to keep consistent with DRX information of sending UE such as the first communication device as much as possible.

Further, after the second communication device switches to the DRX information that is corresponding to the SL multicast or the SL broadcast and that is obtained from the core network device or the PCF network element, when the second communication device detects that the performance parameter, for example, at least one of the latency parameter or the data transmission rate, still meets the preset condition, that is, when the transmission performance is still relatively poor, the second communication device switches to DRX information in an ME or a UICC.

In an implementation, if determining that the current coverage status is out of coverage OCC 2, when determining that the receiving performance corresponding to the currently used DRX information obtained from the PCF network element is lower than the preset condition, the second communication device may switch to use the DRX information in the ME/UICC.

In the foregoing implementation, the receiving UE may determine, based on whether the data transmission performance of the SL multicast or the SL broadcast corresponding to the currently used DRX information meets the preset condition, whether the source of the DRX information needs to be switched, so that the receiving UE can flexibly match the corresponding DRX information in combination with a current signal coverage status of the receiving UE when the data transmission performance is relatively poor, to use DRX information consistent with that of the sending UE, thereby avoiding a packet loss of the receiving UE and improving data transmission reliability of the SL multicast or broadcast service.

In an implementation, for the sending UE of the SL multicast or broadcast service, the first communication device is used as an example, and the determining that a performance parameter corresponding to the DRX information corresponding to the SL multicast or the SL broadcast meets a preset condition in step S801 may specifically include: The first communication device determines that the quantity of DTX corresponding to the DRX information or the quantity of received NACKs meets the preset condition.

In other words, for an SL multicast or broadcast HARQ manner 2, the sending UE may determine, based on a retransmission request, to switch to use the DRX information corresponding to the SL multicast or the SL broadcast.

The quantity of DTX may be used to indicate a quantity of HARQ processes in which the first communication device receives no ACK or NACK feedback in the HARQ processes corresponding to the DRX information of the first communication device. For example, when the first communication device enables a HARQ, for a first HARQ process corresponding to the DRX information, if the first communication device receives no HARQ feedback corresponding to the first HARQ process, the quantity of DTX is accumulated by 1.

Further, in an implementation, that the first communication device determines that the quantity of DTX corresponding to the DRX information or the quantity of received NACKS meets the preset condition may specifically include: The first communication device determines that the quantity of DTX corresponding to the DRX information is greater than or equal to a third threshold, or that the quantity of received NACKS corresponding to the DRX information is greater than or equal to a fourth threshold, or the first communication device determines that the quantity of DTX corresponding to the DRX information is greater than or equal to a third threshold and that the quantity of received NACKS corresponding to the DRX information is greater than or equal to a fourth threshold. A specific parameter configuration of the third threshold or the fourth threshold is not specifically limited in this embodiment of this application.

It should be noted that, in an implementation of this application, that a value meets a preset condition may alternatively mean that the value falls within a value range. For example, it indicates that A is greater than or equal to a threshold 1 and that A is less than or equal to a threshold 2.

In an implementation, the quantity of DTX or the quantity of NACKS may include a quantity of DTX or a quantity of NACKS in a preset time or a unit time.

For example, if the current coverage status of the first communication device is the in coverage, when the first communication device determines that a quantity of DTX corresponding to the currently used DRX information or a quantity of retransmission requests (that is, a quantity of NACKS) is greater than the preset threshold, the first communication device may switch to the pre-configured DRX information, or use the DRX information obtained from the core network device or the PCF network element.

Further, after switching to the DRX information obtained from the core network device or the PCF network element, if it is detected that the quantity of DTX corresponding to the DRX information or the quantity of retransmission requests (that is, the quantity of NACKS) is still greater than the preset threshold, the first communication device switches to use the DRX information in the ME or the UICC.

In an implementation, if the current coverage status of the first communication device is the out of coverage OCC 2, when the quantity of DTX corresponding to the currently used DRX information or the quantity of retransmission requests (that is, the quantity of NACKS) is greater than the preset threshold, the first communication device may switch to use the DRX information in the ME or the UICC.

Based on the foregoing implementation of this application, the sending UE of the SL multicast or broadcast service may determine, based on whether the quantity of DTX of the SL multicast or the SL broadcast corresponding to the currently used DRX information or the quantity of retransmission requests meets the preset condition, whether the source of the DRX information needs to be switched, so that the sending UE can flexibly match the corresponding DRX information in combination with the current signal coverage status of the sending UE when the data transmission performance is relatively poor, to use the DRX information consistent with that of the receiving UE, thereby avoiding a packet loss of the SL multicast or broadcast service and improving data transmission reliability of the SL multicast or broadcast service.

In addition, based on a problem that the DRX information of the sending UE and DRX information of a plurality of receiving UEs may be inconsistent in the SL multicast or broadcast service, an embodiment of this application further provides an implementation, applied to a network device, to align DRX information of the SL multicast or broadcast service.

The method may specifically include: determining, by a network device, that DRX information of the SL multicast or the SL broadcast changes, and sending changed DRX information of the SL multicast or the SL broadcast to user equipment. For example, the network device may be a base station, a core network device, a PCF network element, or the like. This is not specifically limited in this embodiment of this application. The user equipment may be the first communication device and/or the second communication device in the foregoing embodiment.

In the foregoing possible implementation, the network device cyclically delivers and updates the DRX configuration information of the SL multicast or the SL broadcast, so that sending UE and receiving UE can use consistent DRX information, to avoid a packet loss of the SL multicast or broadcast service, thereby improving data transmission reliability of the SL multicast or broadcast service.

In any method for transmitting coverage status information between communication devices, one communication device may send coverage status information request information or coverage status information query information to a peer communication device of the communication device. After receiving the request information or the query information, the peer communication device may send coverage status information of the peer communication device to the communication device. Optionally, the coverage status information request information or the coverage status information query information may carry coverage status information of an information sending subject. For example, a second communication device sends coverage status information request information or coverage status information query information to a first communication device. After receiving the request information or the query information, the first communication device may send coverage status information of the first communication device to the second communication device. Optionally, the coverage status information request information or the coverage status information query information sent by the second communication device to the first communication device may carry coverage status information of the second communication device. For another example, in the foregoing example, the first communication device can be replaced with the second communication device, and the second communication device can be replaced with the first communication device.

In the present invention, in the method for determining, based on "receiving a NACK", whether to enable a third timer, the "receiving a NACK" may alternatively be replaced with "determining that data is not successfully sent", "determining that data corresponding to a first SL process is not successfully sent", or "determining that not all receiving UEs successfully decode data". This is because for UE that sends data, a condition for enabling the third timer is not only "receiving a NACK feedback". If the UE that sends data receives no NACK on a corresponding feedback resource (possibly because a transmission conflict occurs when a UE side that sends data or a receiving UE side receives or sends the NACK, or because a channel condition deteriorates), it may also be considered that a receiving device unsuccessfully decodes the data. Therefore, the third timer may also be enabled, to perform corresponding retransmission.

Based on the steps performed by the first communication device in the foregoing implementation, an embodiment of this application further provides a sidelink transmission apparatus. As shown in FIG. 9, the apparatus 900 may include a processing module 901 and a transmission module 902.

The processing module 901 may be configured to determine that at least one of the following conditions is met: A first timer corresponding to sidelink DRX is not running, a second timer corresponding to DRX is not running, or a third timer corresponding to a first sidelink SL process is running.

The first timer is used to indicate information about a time in which the first communication device sends SCI in a DRX cycle, or is used to indicate information about a time in which a receive end of the first communication device performs listening in a DRX cycle. The second timer is used to indicate information about a time in which the first communication device continues to send another piece of SCI after sending the SCI, or is used to indicate information about a time in which a receive end of the first communication device continues to perform listening after receiving SCI. The third timer is used to indicate information about a time in which the first communication device schedules SL retransmission corresponding to the first SL process, or the third timer is used to indicate information about a time required for receiving, by a receive end of the first communication device, resource configuration information, authorization information, or SCI of SL retransmission corresponding to the first SL process.

The transmission module 902 may be configured to schedule retransmission corresponding to the first SL process. The transmission module may also be referred to as a transmission unit. The processing module may also be referred to as a processing unit. The transmission module and the processing module may be specifically implemented by using software and/or hardware. An implementation is not specifically limited in this application.

In a possible implementation, the DRX corresponds to a first multicast destination destination, a first multicast service, or a first multicast group.

In a possible implementation, that a third timer corresponding to a first SL process is running includes: The third timer corresponding to the first SL process is running, or a third timer corresponding to another SL process, other than the first SL process, corresponding to the DRX information is not running; and the scheduling retransmission corresponding to the first SL process includes: skipping scheduling the another SL process, other than the first SL process, corresponding to the DRX to perform retransmission and/or new transmission.

In a possible implementation, if an SL multicast HARQ manner 2 is applied to the first SL process, where the manner 2 is used to indicate that a feedback corresponding to an SL HARQ process includes an acknowledgement (acknowledgement, ACK) or a negative acknowledgement (non-acknowledgement, NACK), the scheduling retransmission corresponding to the first SL process includes: determining that a quantity of negative acknowledgements NACK in the HARQ feedback corresponding to the first SL process is less than a quantity, minus 1, of devices in the first multicast group corresponding to the first SL process; and scheduling retransmission corresponding to the first SL process.

In addition, as shown in FIG. 9, an embodiment of this application further provides a sidelink transmission apparatus. The apparatus 900 includes a processing module 901 and a transmission module 902.

The processing module 901 may be configured to determine that at least one of the following conditions is met: A first timer corresponding to sidelink DRX is running, a second timer corresponding to DRX is running, or a third timer corresponding to a first sidelink SL process is running.

The transmission module 902 may be configured to perform retransmission and/or new transmission in the first SL process.

In a possible implementation, the DRX corresponds to a first multicast destination, a first multicast service, or a first multicast group; and the performing corresponding retransmission and/or new transmission in the SL process includes: performing retransmission and/or new transmission corresponding to the first multicast destination, the first multicast service, or the first multicast group in the SL process.

An embodiment of this application further provides a sidelink transmission apparatus. The apparatus 900 includes a processing module 901 and a transmission module 902.

The processing module 901 may be configured to determine that at least one of the following conditions is met: A NACK is received on at least one PSFCH corresponding to a first SL process; or an SL multicast HARQ manner 2 is applied to a first SL process, a quantity of NACKs corresponding to the first SL process is a quantity, minus 1, of devices in a first multicast group corresponding to the first SL process, and a third timer corresponding to the first SL process is running.

The transmission module 902 may be configured to perform transmission in at least one SL process of DRX corresponding to the first SL process. The manner 2 is used to indicate that a feedback corresponding to an SL HARQ process includes an acknowledgement ACK or a negative acknowledgement NACK.

In a possible implementation, the DRX corresponds to a first multicast destination destination, a first multicast service, or a first multicast group.

In a possible implementation, that a NACK feedback is received on at least one physical sidelink feedback channel PSFCH corresponding to the first SL process includes: The NACK is received on each of K physical sidelink feedback channels PSFCH corresponding to the first SL process, where K is a total quantity of PSFCH resources; or the NACK is received on at least n physical sidelink feedback channels PSFCH corresponding to the first SL process.

In a possible implementation, that a quantity of NACK feedbacks corresponding to the first SL process is a quantity, minus 1, of devices in a first multicast group corresponding to the first SL process includes: The SL multicast HARQ manner 2 is applied to the first SL process, and the quantity of NACK feedbacks received in the first SL process is the quantity, minus 1, of devices in the first multicast group corresponding to the first SL process.

In a possible implementation, the performing transmission in at least one SL process of DRX corresponding to the SL process includes: performing transmission in any SL process of the DRX corresponding to the SL process.

In a possible implementation, the SL process includes an SL HARQ process.

An embodiment of this application further provides a sidelink transmission apparatus. As shown in FIG. 10, the apparatus 1000 includes a processing module 1001.

The processing module 1001 may be configured to determine that a transmission type and/or a HARQ manner corresponding to a first SL process meets a second condition. The processing module 1001 may be further configured to enable a third timer.

The transmission type includes at least one of unicast, multicast, or broadcast, and the HARQ manner includes a manner 1 or a manner 2. The manner 1 is used to indicate that a feedback corresponding to an SL HARQ process includes a NACK, and the manner 2 is used to indicate that the feedback corresponding to the SL HARQ process includes an ACK or a NACK.

In a possible implementation, that a transmission type and/or a HARQ manner corresponding to a first SL process meets a second condition includes: The transmission type corresponding to the first SL process is multicast, the HARQ manner is the manner 2, and the first communication device receives a NACK corresponding to the first SL process.

In a possible implementation, that a transmission type and/or a HARQ manner corresponding to a first SL process meets a second condition includes: The transmission type corresponding to the first SL process is multicast, the HARQ manner is the manner 2, and a quantity of HARQ feedbacks that correspond to the first SL process and that are received by the first communication device is less than a quantity, minus 1, of devices in a first multicast group corresponding to a first SL HARQ process; or the transmission type corresponding to the first SL process is multicast, the HARQ manner is the manner 2, and a quantity of ACKs or NACKs that correspond to the first SL process and that are received by the first communication device is less than a quantity, minus 1, of devices in a first multicast group corresponding to the first SL process.

In a possible implementation, that a transmission type and/or a HARQ manner corresponding to a first SL process meets a second condition includes: The transmission type corresponding to the first SL process is unicast, or the transmission type corresponding to the first SL process is multicast and the HARQ manner is the manner 1; and the first communication device receives the NACK feedback corresponding to the first SL process.

In a possible implementation, the processing module 1001 may be further configured to: when it is determined that a fourth timer corresponding to the first SL process expires, determine to enable the third timer. The fourth timer is used to indicate information about a time before resource configuration information, authorization information, or SCI expected to be used for SL retransmission reaches a receive end, or is used to indicate information about a time before the first communication device schedules retransmission corresponding to the first SL process.

In a possible implementation, the processing module 1001 may be further configured to: determine that a quantity of times of retransmission corresponding to the first SL process is less than a preset threshold; and enable the third timer.

In a possible implementation, the processing module 1001 may be further configured to: determine that a quantity of times of retransmission corresponding to the first SL process reaches a preset threshold; and disable the third timer corresponding to the first SL process.

An embodiment of this application further provides a sidelink transmission apparatus. As shown in FIG. 10, the apparatus 1000 includes a processing module 1001.

The processing module 1001 may be configured to: determine that a quantity of times of retransmission corresponding to a first SL process reaches a preset threshold; and disable a third timer corresponding to the first SL process.

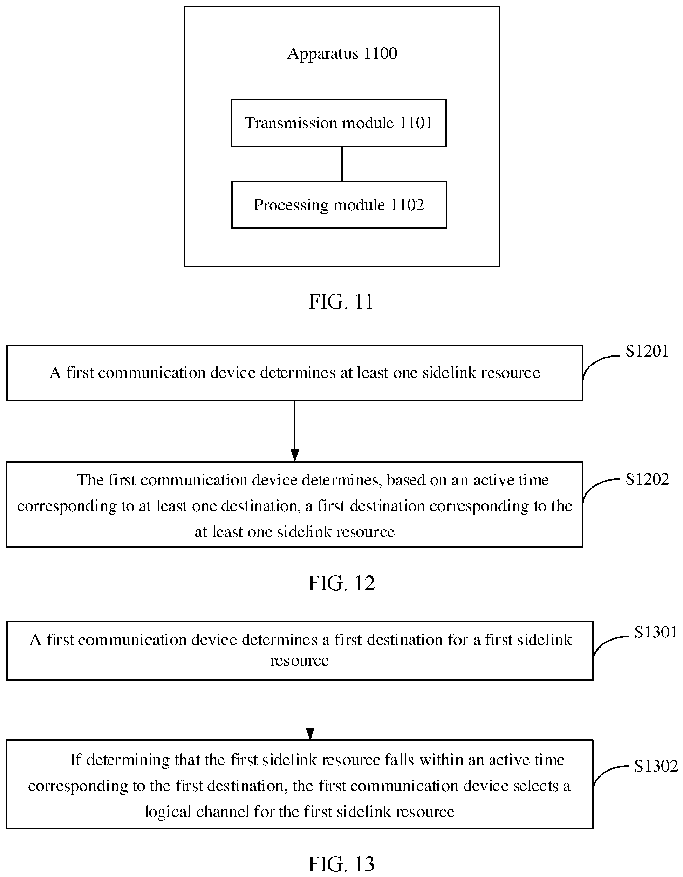

Based on the steps performed by the second communication device in the foregoing implementation, an embodiment of this application further provides a sidelink transmission apparatus. As shown in FIG. 11, the apparatus 1100 may include a transmission module 1101 and a processing module 1102.

The transmission module 1101 may be configured to: determine that data corresponding to a first SL process is not successfully received; and send a NACK corresponding to the first SL process to a first communication device.

The processing module 1102 may be configured to enable a third timer. The third timer is used to indicate information about a time in which the first communication device schedules SL retransmission corresponding to the first SL process, or the third timer is used to indicate information about a time required for receiving, by the first communication device, resource configuration information, authorization information, or SCI of SL retransmission corresponding to the first SL process.

In a possible implementation, the processing module 1102 may be configured to: when it is determined that a fourth timer corresponding to the first SL process expires, enable the third timer. The fourth timer is used to indicate information about a time before resource configuration information, authorization information, or SCI expected to be used for SL retransmission reaches a receive end, or is used to indicate information about a time before the first communication device schedules retransmission corresponding to the first SL process.

Based on the steps performed by the first communication device in the foregoing implementation, an embodiment of this application further provides a sidelink transmission apparatus. As shown in FIG. 9, the apparatus 900 may include a processing module 901 and a transmission module 902.

The processing module 901 may be configured to determine first information. The first information includes coverage status information of a first communication device.

The transmission module 902 may be configured to send the first information to a second communication device.

In a possible implementation, the coverage status information includes at least one of in coverage, first out of coverage, second out of coverage, or third out of coverage, and the in coverage is used to indicate that the first communication device can obtain DRX information from a base station, or is used to indicate that the first communication device detects, at a frequency configured for SL communication, at least one cell that meets a third condition; the first out of coverage is used to indicate that the first communication device does not obtain the DRX information from the base station, or is used to indicate that the first communication device detects, at the frequency configured for SL communication, no cell that meets the third condition; the second out of coverage is out of coverage used to indicate that the first communication device can obtain the DRX information from a core network or a policy control function PCF; and the third out of coverage is out of coverage used to indicate that the first communication device does not obtain the DRX information from a core network device or the policy control function (Policy Control Function, PCF) network element.

In a possible implementation, that the third condition is met includes at least one of the following: A criterion S is met, a cell selection condition is met, or signal strength meets a preset threshold.

In a possible implementation, the first information includes DRX information corresponding to SL multicast or SL broadcast.

Based on the steps performed by the first communication device in the foregoing implementation, an embodiment of this application further provides a sidelink transmission apparatus. As shown in FIG. 11, the apparatus 1100 may include a transmission module 1101 and a processing module 1102.

The transmission module 1101 may be configured to receive first information from a first communication device, where the first information includes coverage status information of the first communication device.

The processing module 1102 may be configured to determine DRX information based on the first information.

In a possible implementation, the coverage status information includes at least one of in coverage, first out of coverage, second out of coverage, or third out of coverage, and the in coverage is used to indicate that the first communication device obtains the DRX information from a base station, or is used to indicate that the first communication device detects, at a frequency configured for SL communication, at least one cell that meets a third condition; the first out of coverage is used to indicate that the first communication device does not obtain the DRX information from the base station, or is used to indicate that the first communication device detects, at the frequency configured for SL communication, no cell that meets the third condition; the second out of coverage is out of coverage used to indicate that the first communication device can obtain the DRX information from a core network or a policy control function PCF; and the third out of coverage is out of coverage used to indicate that the first communication device does not obtain the DRX information from the core network or the policy control function PCF.

In a possible implementation, that the third condition is met includes at least one of the following: A criterion S is met, a cell selection condition is met, or signal strength meets a preset threshold.

In a possible implementation, the first information includes DRX information corresponding to SL multicast or SL broadcast.

In a possible implementation, the processing module 1102 may be configured to: if the coverage status information of the first communication device is consistent with coverage status information of the second communication device, skip using or ignore the DRX information that corresponds to the SL multicast or the SL broadcast and that is received from the first communication device.

In a possible implementation, the processing module 1102 may be configured to: if the coverage status information of the first communication device is inconsistent with coverage status information of the second communication device, use the DRX information that corresponds to the SL multicast or the SL broadcast and that is received from the first communication device.

In a possible implementation, the processing module 1102 may be configured to: determine that a coverage status of the second communication device is second out of coverage and the coverage status information of the first communication device is in coverage. In this case, the processing module 1102 may be configured to send second information to a network device, where the second information is used to request the DRX information corresponding to the SL multicast or the SL broadcast.

In a possible implementation, the network device includes the core network or the policy control function PCF.

Based on the steps performed by the network device in the foregoing implementation, an embodiment of this application further provides a communication apparatus. As shown in FIG. 9, the apparatus 900 may include a processing module 901 and a transmission module 902.

The processing module 901 may be configured to determine that DRX information corresponding to SL multicast or SL broadcast changes.

The transmission module 902 may be configured to send, to a first communication device and/or a second communication device, changed DRX information corresponding to the SL multicast or the SL broadcast.

Based on the steps performed by the first communication device in the foregoing implementation, an embodiment of this application further provides a sidelink transmission apparatus. As shown in FIG. 11, the apparatus 1100 may include a transmission module 1101 and a processing module 1102.

The transmission module 1101 may be configured to receive third information from a second communication device, where the third information includes coverage status information of the second communication device.

The processing module 1102 may be configured to determine, based on the third information, to send fourth information to the second communication device, where the fourth information includes DRX information corresponding to SL multicast or SL broadcast.

In a possible implementation, the coverage status information includes at least one of in coverage, first out of coverage, second out of coverage, or third out of coverage, and the in coverage is used to indicate that the first communication device can obtain the DRX information from a base station, or is used to indicate that the first communication device detects, at a frequency configured for SL communication, at least one cell that meets a third condition; the first out of coverage is used to indicate that the first communication device does not obtain the DRX information from the base station, or is used to indicate that the first communication device detects, at the frequency configured for SL communication, no cell that meets the third condition; the second out of coverage is out of coverage used to indicate that the first communication device can obtain the DRX information from a core network or a policy control function PCF; and the third out of coverage is out of coverage used to indicate that the first communication device does not obtain the DRX information from the core network or the policy control function PCF.

In a possible implementation, that the third condition is met includes at least one of the following: A criterion S is met, a cell selection condition is met, or signal strength meets a preset threshold.

In a possible implementation, the processing module 1102 may be specifically configured to: if the coverage status information of the second communication device is inconsistent with coverage status information of the first communication device, send the fourth information to the second communication device.

Based on the steps performed by the second communication device in the foregoing implementation, an embodiment of this application further provides a sidelink transmission apparatus. As shown in FIG. 11, the apparatus 1100 may include a transmission module 1101 and a processing module 1102.

The transmission module 1101 may be configured to send third information to a first communication device, where the third information includes coverage status information of a second communication device.

The processing module 1102 may be configured to determine DRX information corresponding to SL multicast or SL broadcast.

In a possible implementation, the coverage status information includes at least one of in coverage, first out of coverage, second out of coverage, or third out of coverage, and the in coverage is used to indicate that the first communication device can obtain the DRX information from a base station, or is used to indicate that the first communication device detects, at a frequency configured for SL communication, at least one cell that meets a third condition; the first out of coverage is used to indicate that the first communication device does not obtain the DRX information from the base station, or is used to indicate that the first communication device detects, at the frequency configured for SL communication, no cell that meets the third condition; the second out of coverage is used to indicate that the first communication device can obtain the DRX information from a core network or a policy control function PCF; and the third out of coverage is used to indicate that the first communication device does not obtain the DRX information from the core network or the policy control function PCF.

In a possible implementation, that the third condition is met includes at least one of the following: A criterion S is met, a cell selection condition is met, or signal strength meets a preset threshold.

In a possible implementation, the processing module 1102 may be specifically configured to: receive fourth information from the first communication device, where the fourth information includes the DRX information corresponding to the SL multicast or the SL broadcast; and use DRX information included in the fourth information.

Based on the steps performed by the second communication device in the foregoing implementation, an embodiment of this application further provides a sidelink transmission apparatus. As shown in FIG. 10, the apparatus 1000 may include a processing module 1001.

The processing module 1001 may be configured to determine that a performance parameter corresponding to DRX information corresponding to SL multicast or SL broadcast meets a preset condition. The processing module 1001 may be further configured to determine the DRX information corresponding to the SL multicast or the SL broadcast.

In a possible implementation, the processing module 1001 may be specifically configured to determine, based on coverage status information, the DRX information corresponding to the SL multicast or the SL broadcast.

In a possible implementation, the processing module 1001 may be further configured to: when a current coverage status of the second communication device is in coverage, use pre-configured DRX information corresponding to the SL multicast or the SL broadcast, or use DRX information that corresponds to the SL multicast or the SL broadcast and that is obtained from a PCF.

In a possible implementation, the processing module 1001 may be further configured to: if it is determined that the performance parameter corresponding to the DRX information corresponding to the SL multicast or the SL broadcast meets the preset condition, use corresponding DRX information in a mobile entity (mobile entity, ME) or a universal integrated circuit card (universal integrated circuit card, UICC).

In a possible implementation, if a current coverage status of the second communication device is second out of coverage, the corresponding DRX information in the mobile entity ME or the universal integrated circuit card UICC is used.

In a possible implementation, the performance parameter includes a latency and/or a data transmission rate.

In a possible implementation, that a performance parameter corresponding to DRX information corresponding to SL multicast or SL broadcast meets a preset condition includes: The performance parameter corresponding to the DRX information corresponding to the SL multicast or the SL broadcast is less than a preset threshold.

In a possible implementation, that a performance parameter corresponding to DRX information corresponding to SL multicast or SL broadcast meets a preset condition, or that the performance parameter corresponding to the DRX information corresponding to the SL multicast or the SL broadcast is less than a preset threshold includes at least one of the following: A latency corresponding to the DRX information is greater than or equal to a first threshold; and the data transmission rate is less than or equal to a second threshold.

Based on the steps performed by the first communication device in the foregoing implementation, an embodiment of this application further provides a sidelink transmission apparatus. As shown in FIG. 10, the apparatus 1000 may include a processing module 1001.

The processing module 1001 may be configured to: determine that a performance parameter corresponding to DRX information corresponding to SL multicast or SL broadcast meets a preset condition; and determine the DRX information corresponding to the SL multicast or the SL broadcast.

In a possible implementation, the processing module 1001 may be specifically configured to determine, based on coverage status information, the DRX information corresponding to the SL multicast or the SL broadcast.

In a possible implementation, the processing module 1001 may be specifically configured to: when a current coverage status of the first communication device is in coverage, use pre-configured DRX information corresponding to the SL multicast or the SL broadcast, or use DRX information that corresponds to the SL multicast or the SL broadcast and that is obtained from a PCF.

In a possible implementation, when the DRX information that corresponds to the SL multicast or the SL broadcast and that is obtained from the PCF is used, the method includes: if it is determined that the performance parameter corresponding to the DRX information corresponding to the SL multicast or the SL broadcast meets the preset condition, using the corresponding DRX information in an ME or a universal integrated circuit card UICC.

In a possible implementation, the processing module 1001 may be specifically configured to: if the current coverage status of the first communication device is second out of coverage, use corresponding DRX information in a mobile entity ME or a universal integrated circuit card UICC.

In a possible implementation, that a performance parameter corresponding to DRX information corresponding to SL multicast or SL broadcast meets a preset condition includes: A quantity of discontinuous transmission (discontinuous transmission, DTX) corresponding to the DRX information or a quantity of received NACKs meets the preset condition.

In a possible implementation, that a quantity of DTX corresponding to the DRX information or a quantity of received NACKs meets a preset condition includes at least one of the following: The quantity of DTX corresponding to the DRX information is greater than or equal to a third threshold; and the quantity of received NACKs corresponding to the DRX information is greater than or equal to a fourth threshold.

In a possible implementation, the quantity of NACKs includes a quantity of retransmission requests.

In a possible implementation, the quantity of DTX or the quantity of NACKs includes a quantity of DTX or a quantity of NACKs in a preset time or a unit time.

In a possible implementation, an SL multicast or broadcast HARQ manner is a manner 2.

It should be noted that "a packet loss of receiving LTE" in this embodiment of this application means that the receiving UE loses a packet that is not successfully received or that is not successfully decoded, and a packet that is successfully received or that is successfully decoded by the receiving UE is not included. For example, if UE 1 has successfully decoded a packet A, and subsequently, if the sending UE continues to send retransmission of the packet A, the UE 1 unsuccessfully receives or decodes retransmission of the packet A. In this case, it should not be understood that the UE 1 discards the packet.

In addition, it should be noted that, in SL DRX in the following implementation, the onduration timer is used to indicate a time period after an SL DRX cycle starts, information about a time in which a receiving device of a communication device performs listening in a DRX cycle, or information about a time in which the communication device sends the SCI in a DRX cycle.

The inactivity timer is used to indicate information about a time for continuing to receive the SCI after a first slot of SCI indicating new SL transmission is received, or information about a time in which the receiving device of the communication device continues to receive the SCI after receiving SCI indicating new SL transmission, or information about a time in which the communication device continues to send the SCI after sending SCI indicating new SL transmission.

The retransmission timer of the first SL process is used to indicate a longest time until SL retransmission is received, or information about a time in which the receiving device of the communication device receives SL retransmission corresponding to the first SL process, or information about a time required for sending, by the communication device, resource configuration information, authorization information, or SCI of SL retransmission corresponding to the first SL process.

Based on the foregoing problem, an embodiment of this application further provides a sidelink transmission method. An active time (active time) of sidelink multicast or unicast is redefined, so that a destination can be determined based on an active time of a candidate destination in a destination selection process, thereby avoiding a packet loss of receiving UE corresponding to the selected destination.

The method may be applied to a first communication device (sending UE). As shown in FIG. 12, the method may include the following steps.

S1201: A first communication device determines at least one sidelink resource.

The sidelink resource, that is, an SL grant, may be determined in the foregoing NR SL resource allocation mode: a mode 1 or a mode 2. For example, the SL grant may be configured by a base station for the first communication device, or the SL grant may be determined by the first communication device by autonomously selecting a resource. This is not specifically limited in this application.

S1202: The first communication device determines, based on an active time corresponding to at least one destination, a first destination corresponding to the at least one sidelink resource.

The at least one sidelink transmission resource is used for SL multicast transmission or SL unicast transmission corresponding to the first destination. The at least one destination includes the candidate destination, and may include a sidelink SL multicast destination and/or an SL unicast destination.

It should be noted that the active time in this embodiment of this application is a time in which a communication device listens on SCI. That is, when using an SL DRX mechanism, a receiving device of the first communication device needs to listen on the SCI in the active time.

The SCI may include first-level SCI and/or second-level SCI, or the SCI includes second-level SCI on a physical sidelink control channel (PSCCH Physical Sidelink Control Channel, PSCCH) and/or a physical sidelink shared channel (Physical Sidelink Share Channel, PSSCH).

In an implementation, that the first communication device determines, based on the active time corresponding to the candidate destination, a first destination corresponding to the at least one sidelink resource may specifically include: A time domain location of the at least one sidelink resource falls within the active time corresponding to the first destination, or the at least one sidelink resource falls within the active time corresponding to the first destination.

In other words, when selecting a destination destination for the at least one sidelink resource, the first communication device needs to ensure that the time domain location of the at least one sidelink resource falls within the active time corresponding to the selected first destination, and the first destination corresponds to SL multicast transmission or SL unicast transmission.

An active time corresponding to the SL multicast destination includes a running time of either of an onduration timer onduration timer and an inactivity timer inactivity timer of SL DRX.

In an implementation, because a receiving device that enables a retransmission timer is in a listening state, and no packet is lost in the retransmission timer, if all receiving UEs in a multicast group enable a retransmission timer corresponding to the first SL process, when the first communication device selects the destination destination based on the active time, the active time corresponding to the multicast destination may further include a running time of the retransmission timer that is corresponding to the first SL process and that is enabled by all the receiving UEs.

In other words, the active time corresponding to the SL multicast destination may include the running time of either of the onduration timer onduration timer and the inactivity timer inactivity timer of the SL DRX, and a running time of a retransmission timer retransmission timer of a first SL process that meets a first condition.

The first condition may include: A NACK is received on all PSFCHs corresponding to the first SL process; or a quantity of NACKs received in the first SL process is a group size, minus 1, corresponding to the first destination. The group size corresponding to the first destination includes a quantity of devices or a quantity of members in the multicast group corresponding to the first destination.

Specifically, that a NACK is received on all PSFCHs corresponding to the first SL process includes: The NACK is received on all K PSFCHs corresponding to the first SL process, where K is a total quantity of PSFCH resources. Alternatively, the NACK is received on at least n PSFCHs corresponding to the first SL process.

The group size, minus 1, corresponding to the first destination is a total quantity of receiving UEs. That a quantity of NACKs corresponding to the first SL process is a group size, minus 1, corresponding to the first destination includes: An SL multicast HARQ manner 2 is applied to the first SL process, where the SL multicast HARQ manner 2 is used to indicate that a feedback corresponding to an SL HARQ process includes an acknowledgement ACK or a negative acknowledgement NACK, that is, when successfully decoding received data, the receiving UE feeds back an ACK to the sending UE; and when unsuccessfully decoding the received data, the receiving UE feeds back a NACK to the sending UE.

Alternatively, the active time corresponding to the SL multicast destination does not include a running time of only the retransmission timer retransmission timer. In other words, the active time corresponding to the SL multicast destination does not include a time in which the onduration timer and the inactivity timer of the SL DRX do not run and the retransmission timer retransmission timer runs, or the active time corresponding to the SL multicast destination is another time other than the time in which the onduration timer and the inactivity timer do not run and the retransmission timer runs.

It should be noted that "the active time corresponding to the SL multicast destination includes a running time of either of the onduration timer and the inactivity timer of the SL discontinuous reception DRX" described in this embodiment of this application may also be understood as that "the active time corresponding to the SL multicast destination includes only the running time of either of the onduration timer and the inactivity timer of the SL discontinuous reception DRX". Similar descriptions corresponding to another active time in this application may also be understood as including only a running time of a provided timer. Details are not repeatedly described below. For example, "the active time corresponding to the SL multicast destination includes the running time of either of the onduration timer and the inactivity timer of the SL DRX, and a running time of a retransmission timer of a first SL process that meets a first condition" in the first condition may also be understood as "the active time corresponding to the SL multicast destination includes only the running time of either of the onduration timer and the inactivity timer of the SL DRX, and the running time of the retransmission timer of the first SL process that meets the first condition".

Alternatively, the active time corresponding to the SL multicast destination does not include only a running time of the retransmission timer retransmission timer corresponding to an SL process that meets a second condition.

The second condition may include: The foregoing first condition is not met, or a quantity of NACKs received on the K PSFCHs corresponding to the first SL process is less than K, where K is a total quantity of PSFCH resources corresponding to the first SL process; or the SL multicast HARQ manner 2 is applied to the first SL process, and the quantity of NACKs received in the first SL process is less than the group size, minus 1, corresponding to the first destination.

In other words, the second condition may include: The first communication device receives no NACK feedback on all the PSFCHs corresponding to the first SL process. That is, the first communication device does not determine that all the receiving UEs enable the retransmission timer corresponding to the first SL process.

Optionally, an active time corresponding to the SL unicast destination includes a running time of any one of an onduration timer onduration timer of SL DRX, an inactivity timer inactivity timer of SL DRX, and a retransmission timer retransmission timer corresponding to an SL process of the SL unicast destination that receives a PSFCH, and a time of waiting to receive a CSI report.

The time of waiting to receive a CSI report specifically includes: a time between sending of an SL CSI request and receiving of the SL CSI report, a time indicated by a latency bound of the SL CSI report after an SL CSI request is sent, a time in which receiving of the CSI report is expected after an SL CSI request is sent, or a time indicated by sl-LatencyBoundCSI-Report after an SL CSI report request is sent.

In the foregoing implementation, the active time corresponding to the SL multicast/unicast destination is defined, so that in a process of selecting a destination for an SL grant by the sending UE, the sending UE considers an active time active time corresponding to each candidate destination, to ensure that the SL grant falls within the active time corresponding to the selected destination, to avoid a packet loss of the receiving UE when the sending UE transmits data by using the SL grant, thereby improving SL transmission reliability.

In addition, for a receiving UE side, during SL transmission (corresponding to an SL process A) in which an SL HARQ feedback is enabled (enabled), if the receiving UE does not send the SL HARQ feedback corresponding to the SL process to the sending UE, for example, the receiving UE does not send the SL HARQ feedback due to a conflict between SL and UL (prioritization), regardless of whether the receiving UE successfully decodes data transmitted on an SL, a retransmission timer retransmission timer corresponding to the SL process is not enabled. The foregoing implementation on the receiving UE side may be applied to at least SL unicast transmission.

A reason is as follows: In the foregoing implementation, when performing SL transmission, the sending UE may determine or select a destination based on an active time active time of the receiving UE. When determining the active time, the sending UE may not consider "the retransmission timer retransmission timer corresponding to an SL process in which no PSFCH/SL HARQ feedback is received". Therefore, the receiving UE does not need to enable the retransmission timer retransmission timer corresponding to the SL process, so that a waste of power consumption on the receiving UE side can be avoided.

It should be noted that, the behavior of "when the receiving UE does not send the SL HARQ feedback corresponding to the SL process in which the SL HARQ feedback is enabled to the sending UE, no matter whether the receiving UE successfully decodes the SL transmission data, the retransmission timer corresponding to the SL process is not enabled" not only is applicable to a case in which "the retransmission timer retransmission timer corresponding to the SL process in which no PSFCH/SL HARQ feedback is received" is not considered in the active time applied when the sending UE selects the destination, but also is applicable to a case in which "the retransmission timer retransmission timer corresponding to the SL process in which no PSFCH/SL HARQ feedback is received" is not considered in the active time applied when the sending UE performs resource selection, determines whether to perform packet assembly, or determines whether to send a packet.

In addition, an embodiment of this application further provides a sidelink transmission method. For a sidelink resource SL grant of an SL process of a selected destination, sending UE determines whether the SL grant falls within an active time of the destination, to determine whether to perform packet assembly for the SL grant, to avoid a packet loss of receiving UE corresponding to the selected destination.

The method may be applied to a first communication device (sending UE). As shown in FIG. 13, the method may include the following steps.

S1301: The first communication device determines a first destination for a first sidelink resource.

The first sidelink resource is used for transmission on a sidelink. The first destination may be an SL multicast destination and/or an SL unicast destination.

For example, the first communication device determines or selects the first destination for a first SL grant. If the first destination corresponds to multicast, the first SL grant is used for SL multicast transmission corresponding to the first destination. If the first destination corresponds to unicast, the first SL grant is used for SL unicast transmission corresponding to the first destination.

S1302: If determining that the first sidelink resource falls within an active time corresponding to the first destination, the first communication device selects a logical channel for the first sidelink resource.

Correspondingly, if determining that the first sidelink resource falls out of the active time corresponding to the first destination, the first communication device ignores (ignore) the first sidelink resource.

It should be noted that in this embodiment of this application, selecting the logical channel for the determined SL grant may be understood as allocating an SL grant resource to the logical channel, or may be understood as performing packet assembly on the SL grant resource.

In an implementation, if the first sidelink resource is used for multicast transmission, or the first destination corresponds to multicast, the active time corresponding to the first destination includes a running time of any one of an onduration timer onduration timer, an inactivity timer inactivity timer, and a retransmission timer retransmission timer of an SL process that meets a first condition. The first sidelink resource is used in a second SL process.

In the foregoing implementation, the first condition includes at least one of the following conditions: ANACK is received on all PSFCHs corresponding to the second SL process; or a quantity of NACKs received in the second SL process is a group size, minus 1, corresponding to the first destination. A manner 2 is used to indicate that a feedback corresponding to an SL HARQ process includes an ACK or a NACK. Specifically, for detailed descriptions of the first condition, refer to related descriptions in the embodiment corresponding to FIG. 12. Details are not described herein again.

In an implementation, the first sidelink resource may be used for new transmission. For example, the second SL process is used to perform new transmission of SL multicast data on the first destination.

In another implementation, if the first sidelink resource is used for multicast transmission and retransmission, an active time corresponding to the first destination includes an onduration timer onduration timer, an inactivity timer inactivity timer, and a retransmission timer retransmission timer corresponding to the second SL process. The first sidelink resource is used in the second SL process, and the second SL process is used to perform retransmission of the SL multicast data on the first destination.

For ease of description, in an implementation scenario in which the sidelink resource is used for multicast transmission and new transmission, the active time corresponding to the first destination is referred to as a first active time, and is also referred to as a first active time. In this case, the first active time includes a running time of any one of the onduration timer onduration timer, the inactivity timer inactivity timer, and the retransmission timer retransmission timer of the SL process that meets the first condition. Correspondingly, in an implementation scenario in which the sidelink resource is used for multicast transmission and retransmission, the active time corresponding to the first destination is referred to as a second active time, and is also referred to as a second active time. In this case, the second active time includes a running time of any one of the onduration timer onduration timer, the inactivity timer inactivity timer, and the retransmission timer retransmission timer of the second SL process.

It can be seen that a part of the second active time different from the first active time is "the retransmission timer retransmission timer of the second SL process". If some receiving UEs such as UE 2 do not enable the retransmission timer corresponding to the second SL process, it indicates that the UE 2 has successfully decoded data corresponding to the second SL process. Therefore, the sending UE sends retransmission corresponding to the second SL process in a running time of the "retransmission timer corresponding to the second SL process". Even if the UE 2 is in a sleep state and cannot listen on SCI and the UE 2 does not lose a packet, no packet loss occurs.

In addition, it should be noted that, when the first sidelink resource is used for SL multicast retransmission, regardless of whether the SL HARQ feedback is enabled (enabled) or disabled (disabled) in the second SL process, or regardless of whether the sending UE (that is, the first communication device) receives a PSFCH in the second SL process, if receiving UE 2 does not enable the retransmission timer corresponding to the second SL process, it indicates that the UE 2 has successfully decoded data of the second SL process. Therefore, in this case, the sending UE sends retransmission data of the second SL process in the running time of the retransmission timer corresponding to the second SL process, and for the UE 2, no packet loss occurs.

In an implementation, if the first sidelink resource is used for unicast transmission, or the first destination corresponds to unicast, the active time corresponding to the first destination is a third active time, in other words, the third active time.

The third active time includes a running time of any one of the onduration timer, the inactivity timer inactivity timer, the retransmission timer retransmission timer corresponding to the SL process in which the HARQ feedback is received, the retransmission timer retransmission timer corresponding to the SL process in which the HARQ feedback is enabled, and a time of waiting to receive a CSI report.

In an implementation, the first sidelink resource may be used for new transmission. For example, the second SL process is used to perform new transmission of SL unicast data on the first destination.

In another implementation, if the first sidelink resource is used for unicast transmission and retransmission, the active time corresponding to the first destination is a fourth active time, in other words, the fourth active time.

The fourth active time includes the foregoing third active time. Alternatively, the fourth active time includes a running time of any one of the onduration timer onduration timer, the inactivity timer inactivity timer, the retransmission timer retransmission timer corresponding to the SL process in which the HARQ feedback is received, the retransmission timer retransmission timer corresponding to the SL process in which the HARQ feedback is enabled, and a retransmission timer retransmission timer corresponding to the second SL process for which the first sidelink resource is used, and a time of waiting to receive a CSI report.

It can be learned from the foregoing that, compared with the third active time, "the retransmission timer corresponding to the second SL process for which the first sidelink resource is used" additionally falls within the fourth active time. When only a retransmission timer (retransmission timer) corresponding to an SL process is running, regardless of whether the SL HARQ feedback in the SL process is enabled (enabled) or disabled (disabled), or regardless of whether the sending UE receives a PSFCH on the SL process, no packet loss occurs on the receiving UE when the sending UE sends retransmission of the SL process. However, a packet loss occurs on the receiving UE when the sending UE sends new transmission of the SL process.

In the foregoing implementation, the sending UE performs packet assembly only on the SL grant whose time domain location of the SL grant of the determined destination falls within the active time corresponding to the destination, so that during packet assembly, a packet loss of the corresponding receiving UE can be avoided when the sending UE transmits data, thereby improving SL transmission reliability.

In addition, an embodiment of this application further provides a sidelink transmission method. For a sidelink resource SL grant of an SL process of a selected destination, sending UE determines whether the SL grant falls within an active time of the destination, to determine whether to send a packet for the SL grant or whether to generate transmission, to avoid a packet loss of receiving UE corresponding to the selected destination.

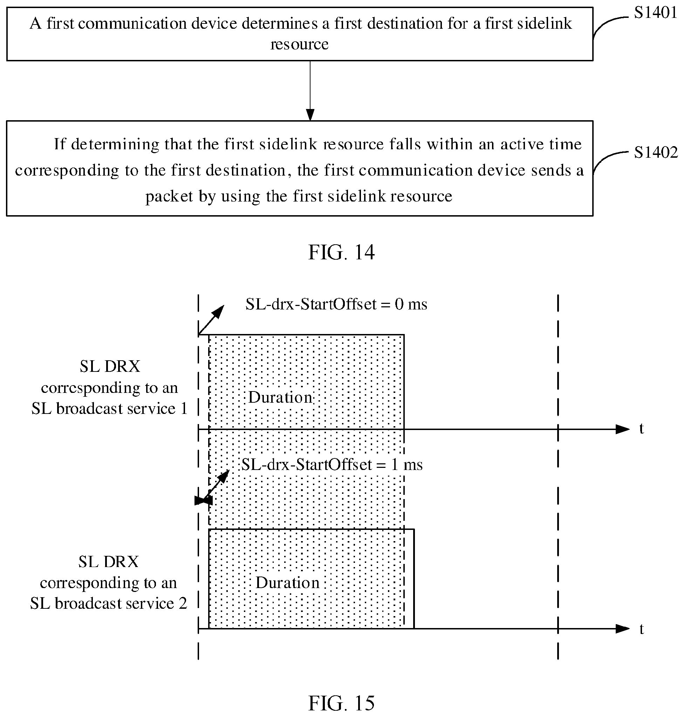

The method may be applied to a first communication device (sending UE). As shown in FIG. 14, the method may include the following steps.

S1401: The first communication device determines a first destination for a first sidelink resource.

The first sidelink resource is used for transmission on a sidelink. The first destination may be an SL multicast destination and/or an SL unicast destination.

For example, the first communication device determines or selects the first destination for a first SL grant. If the first destination corresponds to multicast, the first SL grant is used for SL multicast transmission corresponding to the first destination. If the first destination corresponds to unicast, the first SL grant is used for SL unicast transmission corresponding to the first destination.

S1402: If determining that the first sidelink resource falls within an active time corresponding to the first destination, the first communication device performs packet sending by using the first sidelink resource.

The packet sending indicates that the sending UE indicates a physical layer to generate transmission based on the stored first sidelink resource, or indicates a physical layer to transmit corresponding SCI based on the stored first sidelink resource.

Correspondingly, if determining that the first sidelink resource falls out of the active time corresponding to the first destination, the first communication device does not send a packet by using the first sidelink resource.

In an implementation, if the first sidelink resource is used for multicast transmission and new transmission, or the first destination corresponds to multicast and is used for new transmission, the active time corresponding to the first destination includes a first active time, in other words, a first active time.

In another implementation, if the first sidelink resource is used for multicast transmission and retransmission, or the first destination corresponds to multicast and is used for retransmission, the active time corresponding to the first destination includes a second active time, in other words, a second active time.

In another implementation, if the first sidelink resource is used for unicast transmission and new transmission, or the first destination corresponds to unicast and is used for new transmission, the active time corresponding to the first destination is a third active time, in other words, a third active time.

In another implementation, if the first sidelink resource is used for unicast transmission and retransmission, or the first destination corresponds to unicast and is used for retransmission, the active time corresponding to the first destination is a fourth active time, in other words, a fourth active time.

For a specific definition of the first/second/third/fourth active time, refer to the specific descriptions in the foregoing implementations. Details are not described herein again.

It should be noted that, when only a retransmission timer (retransmission timer) corresponding to an SL process is running, regardless of whether the SL HARQ feedback in the process is enabled (enabled) or disabled (disabled), or regardless of whether the sending UE receives a PSFCH on the SL process, the sending UE may send retransmission corresponding to the SL process. This is because no packet loss occurs on the receiving UE when the sending UE sends retransmission of the SL process. However, the sending UE cannot send new transmission of the SL process, because a packet loss may occur on the receiving UE when the sending UE sends new transmission of the SL process.

In the foregoing implementation, the sending UE may perform packet sending or transmission only on the SL grant whose time domain location falls within the active time corresponding to the destination, so that before packet sending or transmission, a packet loss of the corresponding receiving UE can be avoided when the sending UE transmits data, thereby improving SL transmission reliability.

Further, in a sidelink transmission scenario, when determining to use SL DRX for an SL multicast service or an SL broadcast service that is interested in, the receiving UE or the sending UE may determine a start location of an SL DRX cycle corresponding to an SL DRX configuration, that is, an SL-drx-StartOffset value. When same UE uses the SL DRX for a plurality of SL multicast services or a plurality of SL broadcast services that are interested in, because the SL multicast services or SL broadcast services need to be sent in a corresponding active time, resources of different SL multicast services or SL broadcast services may overlap, or resource collision may occur. Consequently, receiving performance of the UE may be affected.

For example, as shown in FIG. 15, receiving UE is interested in two SL broadcast services, an SL-drx-StartOffset value of the SL DRX corresponding to the UE for an SL broadcast service 1 is 0 ms, an SL-drx-StartOffset value of the SL DRX corresponding to the UE for an SL broadcast service 2 is 1 ms, and an SL DRX cycle is 80 ms. Therefore, it can be seen in FIG. 15 that if a proportion of an overlapping part between an onduration timer onduration timer corresponding to the SL broadcast service 1 and an onduration timer onduration timer corresponding to the SL broadcast service 2 is relatively high. In this case, a probability of collision between a transmission resource corresponding to the SL broadcast service 1 and a transmission resource corresponding to the SL broadcast service 2 is relatively high.

Based on the foregoing problem, an embodiment of this application further provides a sidelink transmission method, to determine a start location of an SL DRX cycle corresponding to an SL multicast service or an SL broadcast service, so that possible collisions between resources corresponding to different SL multicast services or different SL broadcast services are reduced, thereby improving receiving performance of UE.

The SL multicast service or the SL broadcast service may be identified by using a unique identifier. For example, the SL multicast service or SL broadcast service may be identified by using a destination layer-2 ID that is referred to as a DST L2 ID for short. Generally, different SL multicast services or different SL broadcast services correspond to different DST L2 IDs.

In an implementation, if the UE has N different SL-drx-StartOffset values in total, an $n^{th}$ SL-drx-StartOffset value among the N SL-drx-StartOffset values may be indicated by using an index n. A value of n may be {0, 1, ..., N-1}, and an association relationship exists between the index n and SL-drx-StartOffset.

For an SL multicast service or an SL broadcast service, the UE may determine the index n by using the following formula:

n = (DST L2 ID) MOD N, where the DST L2 ID is used to indicate an identifier corresponding to the SL multicast service or the SL broadcast service, and an MOD operator is used to indicate a remainder operation.

After obtaining the index n of SL-drx-StartOffset, the UE may obtain the SL-drx-StartOffset value based on the SL DRX cycle (for example, SL-drx-LongCycle), the index n, a minimum interval Interval between different SL-drx-StartOffsets, and a pre-configured algorithm or an algorithm provided by a network.

The pre-configured algorithm or the algorithm provided by the network is used to indicate a calculation formula or a calculation algorithm of the start location (that is, SL-drx-StartOffset) of the SL DRX cycle.

In an implementation, the UE may obtain the start location (that is, the SL-drx-StartOffset value) of the SL DRX cycle by using the following formula:

$$\text{SL-drx-StartOffset}(n) = (n + 1) \times \text{Interval} - 1 \text{ (formula 1)},$$

where
Interval is used to indicate a minimum interval between different SL-drx-StartOffset values, and may be a positive integer less than the SL DRX cycle; for example, the Interval may be 1, 2, or 4; and

$$n = \{0, \ 1, \ ..., \ \lfloor \text{sl-drx-LongCycle/interval} \rfloor - 1 \}, \text{ and}$$

$\lfloor \text{sl-drx-LongCycle/interval} \rfloor - 1$ indicates a result of rounding down sl-drx-LongCycle/interval.

In another implementation, the UE may obtain the start location (that is, the SL-drx-StartOffset value) of the SL DRX cycle by using the following formula:

$$\text{SL-drx-StartOffset}(n) = (n + 1) \times \text{Interval} - k \text{ (formula 2)},$$

where
k may be a positive integer less than or equal to Interval, and
$$n = \{0, \ 1, \ ..., \ \lfloor \text{sl-drx-LongCycle/interval} \rfloor - 1 \}.$$

In another implementation, the UE may obtain the start location (that is, the SL-drx-StartOffset value) of the SL DRX cycle by using the following formula:

$$\text{SL-drx-StartOffset}(n) = n \times \text{Interval} + m \text{ (formula 3)},$$

where
m may be a positive integer less than Interval, and $n = \{0, \ 1, \ ..., \ \lfloor \text{sl-drx-LongCycle/interval} \rfloor - 1 \}.$

It should be noted that this embodiment of this application provides an implementation in which the UE may obtain the SL-drx-StartOffset value based on the SL DRX cycle, the index n, the minimum interval Interval, and the pre-configured algorithm or the algorithm provided by the network. However, a specific implementation is not limited to the foregoing formula (1), formula (2), or formula (3). The foregoing formulas are merely specific implementations of this application, but the protection scope of this application is not limited thereto. Any variation of the algorithm described in the embodiments of this application or any variation or replacement within the technical scope disclosed in this application shall fall within the protection scope of this application.

In the foregoing implementation, when same receiving UE uses SL DRX for a plurality of SL broadcast services or a plurality of SL multicast services that are interested in, because the minimum interval Interval between different SL-drx-StartOffsets may be a positive integer greater than 1, an overlap (or a proportion) between onduration timers onduration timer or active times of the SL DRX corresponding to different SL broadcast services or different SL multicast services can be reduced. In this way, a probability of resource collision between the different SL broadcast services or the different SL multicast services is reduced, thereby improving receiving performance of the UE is improved.

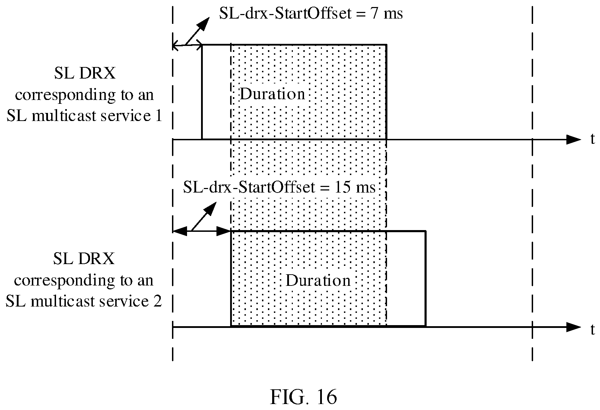

For example, as shown in FIG. 16, DST L2 IDs corresponding to an SL multicast service 1 and an SL multicast service 2 are respectively 0 and 1, the SL DRX cycle is 80 ms, and a minimum interval Interval between SL-drx-StartOffsets of different services may be 8 ms. If the formula (1) is used, an SL-drx-StartOffset value of the SL DRX derived by the UE for the SL multicast service 1 is 7 ms, and an SL-drx-StartOffset value of the SL DRX corresponding to the SL multicast service 2 is 15 ms. It can be seen from FIG. 16 that, compared with FIG. 15, a proportion of an overlapping part between onduration timers onduration timer corresponding to the SL multicast service 1 and the SL multicast service 2 is obviously reduced. In this case, a probability of collision between transmission resources corresponding to the SL multicast service 1 and the SL multicast service 2 is also reduced.

In an implementation, in the foregoing embodiment, parameters or algorithms required for determining the SL-drx-StartOffset value by the UE may be pre-configured or pre-stored in the receiving UE or the sending UE, or may be provided by a network device, or the two manners may be combined. For example, some parameters are determined by the UE based on a local configuration, and other parameters or algorithms are provided by the network device. Alternatively, parameters required for determining the SL-drx-StartOffset value by the UE are pre-configured or pre-stored in the UE, algorithms are provided by the network device. Alternatively, algorithms required by the UE to determine the SL-drx-StartOffset value are pre-configured or pre-stored in the UE, and parameters are provided by the network device.

Specifically, the UE may obtain the SL-drx-StartOffset value based on the SL DRX cycle, the index n, the minimum interval Interval, and the pre-configured algorithm or the algorithm provided by the network. Therefore, the parameters or algorithms that the UE needs to determine may include: the SL DRX cycle, the index n, the minimum interval Interval, and the algorithm corresponding to SL-drx-StartOffset.

A specific implementation provided by the network device may include: The network device may configure a required parameter or algorithm for the UE by using dedicated signaling, for example, by using RRC reconfiguration information. Alternatively, the network device may further provide a required parameter or algorithm in a system broadcast manner, and the UE obtains system broadcast information to determine the required parameter or algorithm.

In the foregoing implementation, several manners of obtaining the parameter or algorithm required by the receiving UE or the sending UE to determine the SL-drx-StartOffset value are provided, so that the UE can flexibly obtain the required parameter or algorithm based on a network coverage status, thereby improving stability and flexibility of network transmission.

Based on the steps performed by the first communication device shown in FIG. 12 in the foregoing implementation, an embodiment of this application further provides a sidelink transmission apparatus. As shown in FIG. 10, the apparatus 1000 may include a processing module 1001.

The processing module 1001 is configured to determine at least one sidelink resource.

The processing module 1001 is further configured to: determine, based on an active time corresponding to at least one destination, a first destination corresponding to the at least one sidelink resource, where the at least one destination includes a sidelink SL multicast destination and/or an SL unicast destination, and the at least one sidelink transmission resource is used for transmission corresponding to the first destination. An active time corresponding to the SL multicast destination includes a running time of at least one of an SL discontinuous reception DRX onduration timer and an inactivity timer. Alternatively, an active time corresponding to the SL multicast destination includes a running time of at least one of the following timers: an SL DRX onduration timer, an inactivity timer, and a retransmission timer of a first SL process that meets a first condition.

In a possible implementation, the active time corresponding to the SL multicast destination does not include a time in which the DRX onduration timer and the inactivity timer are not running and the retransmission timer is running; or the active time corresponding to the SL multicast destination does not include a time in which only the retransmission timer is running; or the active time corresponding to the SL multicast destination does not include a time in which only the retransmission timer corresponding to an SL process that meets a second condition is running.

In a possible implementation, the processing module 1001 is specifically configured to determine that a time domain location of the at least one sidelink resource falls within an active time corresponding to the first destination, or that the at least one sidelink resource falls within an active time corresponding to the first destination.

In a possible implementation, an active time corresponding to the SL unicast destination includes a running time of at least one of an SL DRX onduration timer, an inactivity timer, and a retransmission timer that corresponds to an SL process of the SL unicast destination receiving a PSFCH, and a time of waiting to receive a CSI report.

Based on the steps performed by the first communication device shown in FIG. 13 in the foregoing implementation, an embodiment of this application further provides a sidelink transmission apparatus. As shown in FIG. 10, the apparatus 1000 may include a processing module 1001.

The processing module 1001 is configured to: determine or select a first destination for a first sidelink resource, where the first sidelink resource is used for transmission on a sidelink; and if the first sidelink resource falls within an active time corresponding to the first destination, select a logical channel for the first sidelink resource; and/or if the first sidelink resource falls beyond the active time corresponding to the first destination, ignore the first sidelink resource.

In a possible implementation, if the first sidelink resource is used for multicast transmission, or the first destination corresponds to multicast, the active time includes a running time of at least one of the following timers: an onduration timer, an inactivity timer, and a retransmission timer of an SL process that meets a first condition.

In a possible implementation, the first sidelink resource is used for new transmission.

In a possible implementation, if the first sidelink resource is used for multicast transmission, or the first destination corresponds to multicast, the active time includes a running time of at least one of the following timers: an onduration timer, an inactivity timer, and a retransmission timer corresponding to a second SL process, where the first sidelink resource is used in the second SL process.

In a possible implementation, the first sidelink resource is used for retransmission.

In a possible implementation, if the first sidelink resource is used for unicast transmission, or the first destination corresponds to unicast, the active time includes a time of waiting to receive a CSI report and a running time of at least one of the following timers: an onduration timer, an inactivity timer, a retransmission timer corresponding to an SL process in which a HARQ feedback is received, and a retransmission timer corresponding to an SL process in which a HARQ feedback is enabled.

In a possible implementation, the first sidelink resource is used for new transmission.

In a possible implementation, if the first sidelink resource is used for unicast transmission, or the first destination corresponds to unicast, the active time includes a time of waiting to receive a CSI report and a running time of at least one of the following timers: an onduration timer, an inactivity timer, a retransmission timer corresponding to an SL process in which a HARQ feedback is received, a retransmission timer corresponding to an SL process in which a HARQ feedback is enabled, and a retransmission timer corresponding to the second SL process in which the first sidelink resource is used; or the active time includes a time of waiting to receive a CSI report and a running time of at least one of the following timers: an onduration timer, an inactivity timer, a retransmission timer corresponding to an SL process in which a HARQ feedback is received, and a retransmission timer corresponding to an SL process in which a HARQ feedback is enabled.

In a possible implementation, the first sidelink resource is used for retransmission.

Based on the steps performed by the first communication device shown in FIG. 14 in the foregoing implementation, an embodiment of this application further provides a sidelink transmission apparatus. As shown in FIG. 10, the apparatus 1000 may include a processing module 1001.

The processing module 1001 is configured to: determine or select a first destination for a first sidelink resource, where the first sidelink resource is used for transmission on a sidelink; and if the first sidelink resource falls within an active time corresponding to the first destination, indicate a physical layer to generate transmission based on a stored first sidelink resource, or indicate a physical layer to transmit corresponding SCI based on the stored first sidelink resource.

In a possible implementation, if the first sidelink resource is used for multicast transmission, or the first destination corresponds to multicast, the active time includes a running time of at least one of the following timers: an onduration timer, an inactivity timer, and a retransmission timer of an SL process that meets a first condition.

In a possible implementation, the first sidelink resource is used for new transmission.

In a possible implementation, if the first sidelink resource is used for multicast transmission, or the first destination corresponds to multicast, the active time includes a running time of at least one of the following timers: an onduration timer, an inactivity timer, and a retransmission timer corresponding to the second SL process, where the first sidelink resource is used in a second SL process.

In a possible implementation, the first sidelink resource is used for retransmission.

In a possible implementation, if the first sidelink resource is used for unicast transmission, or the first destination corresponds to unicast, the active time includes a time of waiting to receive a CSI report and a running time of at least one of the following timers: an onduration timer, an inactivity timer, a retransmission timer corresponding to an SL process in which a HARQ feedback is received, and a retransmission timer corresponding to an SL process in which a HARQ feedback is enabled.

In a possible implementation, the first sidelink resource is used for new transmission.

In a possible implementation, if the first sidelink resource is used for unicast transmission, or the first destination corresponds to unicast, the active time includes a time of waiting to receive a CSI report and a running time of at least one of the following timers: an onduration timer, an inactivity timer, a retransmission timer corresponding to an SL process in which a HARQ feedback is received, a retransmission timer corresponding to an SL process in which a HARQ feedback is enabled, and a retransmission timer corresponding to the second SL process in which the first sidelink resource is used; or the active time includes a time of waiting to receive a CSI report and a running time of at least one of the following timers: an onduration timer, an inactivity timer, a retransmission timer corresponding to an SL process in which a HARQ feedback is received, and a retransmission timer corresponding to an SL process in which a HARQ feedback is enabled.

In a possible implementation, the first sidelink resource is used for retransmission.

It may be understood that with reference to FIG. 3, when the apparatus is an electronic device, the transmission module may be a transceiver, and may include an antenna, a radio frequency circuit, and the like, and the processing module may be a processor, for example, a baseband chip. When the apparatus is a component having a function of the first communication device and/or the second communication device in the foregoing embodiment, the transmission module may be a radio frequency unit, and the processing module may be a processor. When the apparatus is a chip system, the transmission module may be an input interface and/or an output interface of the chip system, and the processing module may be a processor of the chip system, for example, a central processing unit (central processing unit, CPU).

It should be noted that, for a specific execution process and an embodiment of the foregoing apparatus, refer to the steps performed by the first communication device and/or the second communication device and the related descriptions in the foregoing method embodiments. For a resolved technical problem and a technical effect brought by resolving the technical problem, refer to the content described in the foregoing embodiments. Details are not described one by one herein again.

In this embodiment, the sidelink transmission apparatus is presented in a form of function modules obtained through division in an integrated manner. The "module" herein may be a specific circuit, a processor for executing one or more software or firmware programs, a memory, an integrated logic circuit, and/or another component that may provide the foregoing function. In a simple embodiment, a person skilled in the art may figure out that the sidelink transmission apparatus may be in a form shown in FIG. 3.

For example, a function/implementation process of the processing module 901 in FIG. 9 or the processing module 1001 in FIG. 10 may be implemented by the processor 301 in FIG. 3 by invoking the computer program instructions stored in the memory 304. For example, a function/implementation process of the transmission module 902 in FIG. 9 or the transmission module 1101 in FIG. 11 may be implemented by using the transceiver circuit 302 in FIG. 3.

In some implementations, the processor 301 in FIG. 3 may invoke the computer-executable instructions stored in the memory 304, so that the apparatus 300 can perform the operations of the first communication device, the second communication device, or the network device in the foregoing method embodiments, to implement the sidelink transmission method in this application.

The first communication device, the second communication device, and the network device in the foregoing apparatus embodiments may completely correspond to the first communication device, the second communication device, or the network device in the method embodiments, and a corresponding module or unit performs a corresponding step. For example, when the apparatus is implemented by using a chip, the transmission unit may be an interface circuit that is of the chip and that is configured to receive a signal from another chip or apparatus. The foregoing transmission unit for sending or receiving is an interface circuit of the apparatus, and is configured to send a signal to another apparatus. For example, when the apparatus is implemented by using a chip, the transmission unit may be an interface circuit configured to send a signal to another chip or apparatus.

In an example embodiment, a computer-readable storage medium including instructions or a computer program product is further provided. The instructions may be executed by the processor 301 of the communication apparatus 300 to complete the method in the foregoing embodiment. Therefore, for the technical effects that can be obtained by the computer-readable storage medium, refer to the foregoing method embodiments. Details are not described herein again.

This application further provides a computer program product. The computer program product includes instructions. When the instructions are executed, the first communication device, the second communication device, and the network device are enabled to respectively perform operations corresponding to the first communication device, the second communication device, and the network device in the foregoing methods.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a communication apparatus to which the chip is applied performs the operations of the first communication device, the second communication device, and the network device in the foregoing methods provided in the embodiments of this application.

Optionally, any communication apparatus provided in the embodiments of this application may include the system chip.

Optionally, the computer instructions are stored in a storage unit.

An embodiment of this application further provides a communication system. The communication system may include the first communication device and the second communication device in any one of the foregoing implementations. Further, the communication system may further include the network device in the foregoing implementation.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When a computer program instruction is loaded and executed on a computer, all or some of the procedures or functions according to the embodiments of this application are generated. The computer may be a general-purpose computer, a dedicated computer, a computer network, or another programmable apparatus.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

It should be finally noted that foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink transmission method, applied to a first communication device, (900), wherein the method comprises: determining that the following condition is met:

   a third timer corresponding to a first sidelink SL process is running, wherein the third timer is used to indicate information about a time in which the first communication device schedules SL retransmission corresponding to the first SL process, or the third timer is used to indicate information about a time required for receiving, by a receive end of the first communication device, resource configuration information, authorization information, or Sidelink Control Information, SCI of SL retransmission corresponding to the first SL process; and scheduling retransmission corresponding to the first SL process,
   wherein if an SL multicast Hybrid Automatic Repeat Request, HARQ manner 2 is applied to the first SL process, wherein the manner 2 is used to indicate that a feedback corresponding to an SL HARQ process comprises an acknowledgement ACK or a negative acknowledgement NACK, the scheduling retransmission corresponding to the first SL process comprises:

      determining that a quantity of negative acknowledgements NACK in the HARQ feedback corresponding to the first SL process is less than a quantity, minus 1, of devices in the first multicast group corresponding to the first SL process; and
      scheduling retransmission corresponding to the first SL process.

2. The method according to claim 1, further comprising:
   further determining that at least one of the following conditions is met:

   a first timer corresponding to sidelink discontinuous reception, DRX, is not running, wherein the first timer is used to indicate information about a time in which the first communication device sends sidelink control information, SCI, in a DRX cycle, or is used to indicate information about a time in which a receive end of the first communication device performs listening in a DRX cycle; or
   a second timer corresponding to DRX is not running, wherein the second timer is used to indicate information about a time in which the first communication device continues to send another piece of SCI after sending SCI, or is used to indicate information about a time in which a receive end of the first communication device continues to perform listening after receiving SCI.

3. The method according to claim 2, wherein the DRX corresponds to a first multicast destination, a first multicast service, or a first multicast group.

4. The method according to any one of claims 1 to 3, wherein that a third timer corresponding to a first SL process is running comprises:

   the third timer corresponding to the first SL process is running, or a third timer corresponding to another SL process, other than the first SL process, corresponding to the DRX information is not running; and
   the scheduling retransmission corresponding to the first SL process comprises:
   skipping scheduling the another SL process, other than the first SL process, corresponding to the DRX to perform retransmission and/or new transmission.

5. A communication apparatus (900), wherein the communication apparatus (900) is configured to perform the method according to any one of claims 1 to 4.

6. A communication apparatus (900), wherein the communication apparatus (900) comprises:

   a processor and a communication interface, wherein
   the processor is configured to execute a computer program or instructions stored in the communication apparatus (900), to enable the communication apparatus (900) to perform the method according to any one of claims 1 to 4.

7. A computer-readable storage medium, wherein instructions are stored in the computer-readable storage medium, and when the instructions are run on a computer, the computer is enabled to perform the method according to any one of claims 1 to 4.

**Patentansprüche**

1. "Sidelink"-Übertragungsverfahren, das auf eine erste Kommunikationsvorrichtung (900) angewendet wird, wobei das Verfahren Folgendes umfasst:

Bestimmen, dass die folgende Bedingung erfüllt wird:

ein dritter Zeitgeber, der einem ersten "Sidelink"-Prozess, SL-Prozess, entspricht, läuft, wobei der dritte Zeitgeber verwendet wird, um Informationen über eine Zeit anzugeben, in der die erste Kommunikationsvorrichtung SL-Wiederholungssendung disponiert, die dem ersten SL-Prozess entspricht, oder der dritte Zeitgeber wird verwendet, um Informationen über eine Zeit anzugeben, die erforderlich ist, um Ressourcenkonfigurationsinformationen, Autorisierungsinformationen oder "Sidelink"-Steuerinformationen, SCI, der SL-Wiederholungssendung, die dem ersten SL-Prozess entspricht, durch ein empfangendes Ende der ersten Kommunikationsvorrichtung zu empfangen; und

Disponieren der Wiederholungssendung, die dem ersten SL-Prozess entspricht, wobei, falls eine Methode 2 einer SL-"Multicast-Hybrid Automatic Repeat Request", SL-"Multicast"-HARQ, auf den ersten SL-Prozess angewendet wird, wobei die Methode 2 verwendet wird, um anzugeben, dass eine Rückmeldung, die einem SL-HARQ-Prozess entspricht, eine Bestätigung, ACK, oder eine Negativbestätigung, NACK, umfasst, das Disponieren der Wiederholungssendung, die dem ersten SL-Prozess entspricht, Folgendes umfasst:

Bestimmen, dass eine Menge von Negativbestätigungen, NACK, in der HARQ-Rückmeldung, die dem ersten SL-Prozess entspricht, kleiner ist als eine Menge, minus 1, von Vorrichtungen in der ersten "Multicast"-Gruppe, die dem ersten SL-Prozess entspricht, und

Disponieren der Wiederholungssendung, die dem ersten SL-Prozess entspricht.

2. Verfahren nach Anspruch 1, ferner umfassend:
ferner Bestimmen, dass mindestens eine der folgenden Bedingungen erfüllt wird:

ein erster Zeitgeber, der diskontinuierlichem "Sidelink"-Empfang, "Sidelink"-DRX, entspricht, läuft nicht, wobei der erste Zeitgeber verwendet wird, um Informationen über eine Zeit anzugeben, in der die erste Kommunikationsvorrichtung "Sidelink"-Steuerinformationen, SCI, in einem DRX-Zyklus sendet, oder verwendet wird, um Informationen über eine Zeit anzugeben, in der ein empfangendes Ende der ersten Kommunikationsvorrichtung in einem DRX-Zyklus Horchen durchführt; oder

ein zweiter Zeitgeber, der DRX, entspricht, läuft nicht, wobei der zweite Zeitgeber verwendet wird, um Informationen über eine Zeit anzugeben, in der die erste Kommunikationsvorrichtung fortfährt, nach dem Senden von SCI ein weiteres SCI-Element zu senden, oder verwendet wird, um Informationen über eine Zeit anzugeben, in der ein empfangendes Ende der ersten Kommunikationsvorrichtung fortfährt, nach dem Empfangen von SCI Horchen durchzuführen.

3. Verfahren nach Anspruch 2, wobei der DRX einem ersten "Multicast"-Ziel, einem ersten "Multicast"-Dienst oder einer ersten "Multicast"-Gruppe entspricht.

4. Verfahren nach einem der Ansprüche 1 bis 3, wobei, dass ein dritter Zeitgeber, der einem ersten SL-Prozess entspricht, läuft, Folgendes umfasst:

der dritte Zeitgeber, der dem ersten SL-Prozess entspricht, läuft oder ein dritter Zeitgeber, der einem anderen SL-Prozess als dem ersten SL-Prozess entspricht und den DRX-Informationen entspricht, läuft nicht; und

das Disponieren der Wiederholungssendung, die dem ersten SL-Prozess entspricht, umfasst Folgendes: Überspringen des Disponierens des anderen SL-Prozesses, der ein anderer als der erste SL-Prozess ist und dem DRX entspricht, um Wiederholungssendung und/oder Neuübertragung durchzuführen.

5. Kommunikationsvorrichtung (900), wobei die Kommunikationsvorrichtung (900) zum Durchführen des Verfahrens nach einem der Ansprüche 1 bis 4 konfiguriert ist.

6. Kommunikationsvorrichtung (900), wobei die Kommunikationsvorrichtung (900) Folgendes umfasst:

   einen Prozessor und eine Kommunikationsschnittstelle, wobei
   der Prozessor dazu konfiguriert ist, ein Computerprogramm oder Anweisungen auszuführen, die in der Kommunikationsvorrichtung (900) gespeichert sind, um die Kommunikationsvorrichtung (900) zu befähigen, das Verfahren nach einem Ansprüche 1 bis 4 durchzuführen.

7. Computerlesbares Speichermedium, wobei Anweisungen in dem computerlesbaren Speichermedium gespeichert sind und ein Computer bei Ausführung der Anweisungen auf dem Computer befähigt wird, das Verfahren nach einem der Ansprüche 1 bis 4 durchzuführen.


**Revendications**

1. Procédé de transmission de liaison latérale, appliqué à un premier dispositif (900) de communication, le procédé comportant les étapes consistant à :
   déterminer que la condition suivante est satisfaite :

   un troisième temporisateur correspondant à un premier processus de liaison latérale, SL, est en marche, le troisième temporisateur étant utilisé pour indiquer des informations concernant un temps pendant lequel le premier dispositif de communication planifie une retransmission de SL correspondant au premier processus de SL, ou le troisième temporisateur étant utilisé pour indiquer des informations concernant un temps nécessaire à la réception, par une extrémité de réception du premier dispositif de communication, d'informations de configuration de ressources, d'informations d'autorisation, ou d'informations de commande de liaison latérale, SCI, de retransmission de SL correspondant au premier processus de SL ; et
   planifier une retransmission correspondant au premier processus de SL,
   **caractérisé en ce que**, si une méthode 2 de demande de répétition automatique hybride, HARQ, de multidiffusion de SL est appliquée au premier processus de SL, la méthode 2 étant utilisée pour indiquer qu'une rétroaction correspondant à un processus de HARQ de SL comporte un accusé de réception ACK ou un accusé de réception négatif NACK, la planification d'une retransmission correspondant au premier processus de SL comporte : la détermination du fait qu'une quantité d'accusés de réception négatifs NACK dans la rétroaction de HARQ correspondant au premier processus de SL est inférieure à une quantité, diminuée de 1, de dispositifs dans le premier groupe de multidiffusion correspondant au premier processus de SL ; et
   planifier une retransmission correspondant au premier processus de SL.

2. Procédé selon la revendication 1, comportant en outre :
   le fait de déterminer en outre qu'au moins une des conditions suivantes est satisfaite :

   un premier temporisateur correspondant à une réception discontinue, DRX, de liaison latérale n'est pas en marche, le premier temporisateur étant utilisé pour indiquer des informations concernant un temps pendant lequel le premier dispositif de communication émet des informations de commande de liaison latérale, SCI, dans un cycle de DRX, ou étant utilisé pour indiquer des informations concernant un temps pendant lequel une extrémité de réception du premier dispositif de communication effectue une écoute dans un cycle de DRX ; ou
   un deuxième temporisateur correspondant à la DRX n'est pas en marche, le deuxième temporisateur étant utilisé pour indiquer des informations concernant un temps pendant lequel le premier dispositif de communication continue à émettre un autre fragment de SCI après avoir émis des SCI, ou étant utilisé pour indiquer des informations concernant un temps pendant lequel une extrémité de réception du premier dispositif de communication continue à effectuer une écoute après avoir reçu des SCI.

3. Procédé selon la revendication 2, la DRX correspondant à une première destination de multidiffusion, à un premier service de multidiffusion ou à un premier groupe de multidiffusion.

4. Procédé selon l'une quelconque des revendications 1 à 3, le fait qu'un troisième temporisateur correspondant à un premier processus de SL soit en marche impliquant ce qui suit :

   le troisième temporisateur correspondant au premier processus de SL est en marche, ou un troisième temporisateur correspondant à un autre processus de SL, autre que le premier processus de SL, correspondant aux informations de DRX n'est pas en marche ; et

la planification d'une retransmission correspondant au premier processus de SL comportant :
le fait de sauter la planification de l'autre processus de SL, autre que le premier processus de SL, correspondant à la DRX pour effectuer une retransmission et/ou une nouvelle transmission.

5. Appareil (900) de communication, l'appareil (900) de communication étant configuré pour réaliser le procédé selon l'une quelconque des revendications 1 à 4.

6. Appareil (900) de communication, l'appareil (900) de communication comportant :

un processeur et une interface de communication,
le processeur étant configuré pour exécuter un programme informatique ou des instructions stockés dans l'appareil (900) de communication, pour permettre à l'appareil (900) de communication de réaliser le procédé selon l'une quelconque des revendications 1 à 4.

7. Support de stockage lisible par ordinateur, des instructions étant stockées dans le support de stockage lisible par ordinateur, et l'exécution des instructions sur un ordinateur permet à l'ordinateur de réaliser le procédé selon l'une quelconque des revendications 1 à 4.

FIG. 1

FIG. 2

EP 4 311 356 B1

**FIG. 3**

| A first communication device determines that a first condition is met | S401 |

↓

| The first communication device schedules retransmission corresponding to a first SL process | S402 |

**FIG. 4**

| A first communication device determines that a transmission type and/or a HARQ manner corresponding to a first SL process meets a second condition | S501 |

↓

| The first communication device enables a third timer | S502 |

**FIG. 5**

First communication
device

Second
communication device

S601: Determine first information, where the
first information includes coverage status
information of the first communication device

S602: Send the first information to the
second communication device

S603: Receive the first information

S604: Determine DRX information based on
the first information

FIG. 6

First communication device

Second communication
device

S701: Send third information to the first communication device, where
the third information includes coverage status information of the second
communication device

S702: Receive the third information

S703: Determine, based on the third information, to send fourth information to the
second communication device, where the fourth information includes DRX
information corresponding to SL multicast or SL broadcast

S704: Determine the DRX information

FIG. 7

A communication device determines that a performance parameter corresponding to DRX information corresponding to SL multicast or SL broadcast meets a preset condition — S801

The communication device determines the DRX information corresponding to the SL multicast or the SL broadcast — S802

FIG. 8

Apparatus 900

Processing module 901

Transmission module 902

FIG. 9

Apparatus 1000

Processing module 1001

FIG. 10

Apparatus 1100

Transmission module 1101

Processing module 1102

FIG. 11

A first communication device determines at least one sidelink resource —— S1201

The first communication device determines, based on an active time corresponding to at least one destination, a first destination corresponding to the at least one sidelink resource —— S1202

FIG. 12

A first communication device determines a first destination for a first sidelink resource —— S1301

If determining that the first sidelink resource falls within an active time corresponding to the first destination, the first communication device selects a logical channel for the first sidelink resource —— S1302

FIG. 13

A first communication device determines a first destination for a first sidelink resource ⎯ S1401

If determining that the first sidelink resource falls within an active time corresponding to the first destination, the first communication device sends a packet by using the first sidelink resource ⎯ S1402

FIG. 14

SL-drx-StartOffset = 0 ms

SL DRX corresponding to an SL broadcast service 1

Duration

t

SL-drx-StartOffset = 1 ms

SL DRX corresponding to an SL broadcast service 2

Duration

t

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021032026 A1